# EUROPÄISCHE PATENTSCHRIFT

(11) **EP 4 288 751 B1**
(45) Veröffentlichungstag und Bekanntmachung des Hinweises auf die Patenterteilung: **16.07.2025**
(21) Anmeldenummer: 22702672.1
(22) Anmeldetag: 26.01.2022
(51) Int. Cl.: G01F 11/02, B05C 5/02, G01F 11/36

(54) **DOSIERSYSTEM**
DOSING SYSTEM
SYSTÈME DE DOSAGE

(30) Priorität: 04.02.2021 DE 102021102657
(43) Veröffentlichungstag der Anmeldung: 13.12.2023
(73) Patentinhaber: Vermes Microdispensing GmbH, 83607 Holzkirchen (DE)
(72) Erfinder: FLIEß, Mario, 81549 München (DE)
(74) Vertreter: Beckord & Niedlich Patentanwälte PartG mbB
(86) Internationale Anmeldenummer: PCT/EP2022/051765
(87) Internationale Veröffentlichungsnummer: WO 2022/167289

(56) Entgegenhaltungen:
- EP-A1- 3 636 354
- CN-A- 110 947 579
- CN-B- 105 499 072
- CN-U- 207 667 940
- KR-A- 20190 118 093
- KR-B1- 101 301 107
- US-A1- 2015 300 748

## Beschreibung

Die Erfindung betrifft ein Dosiersystem zur Dosierung eines Dosiermediums, mit einer Rahmengehäuseeinheit, einer an der Rahmengehäuseeinheit gelagerten Hebellagereinheit mit einer Hebelauflage, einem mittels der Hebelauflage um eine Kippachse drehbar gelagerten Hebel mit einem sich im Wesentlichen in einer Längsrichtung erstreckenden, zweiseitigen Hebelarm, wobei eine Hebelarmseite kippachsennah eine erste Aktorangriffsstelle aufweist und kippachsenfern an einem Endabschnitt mit einem Ausstoßelement in Kontakt steht und wobei die andere Hebelarmseite kippachsennah eine zweite Aktorangriffsstelle aufweist. Weiter umfasst das Dosiersystem zwei Aktoren, die im Betrieb gegenläufig ein Kippmoment an der ersten und zweiten Aktorangriffsstelle auf den Hebel ausüben.

Dosiersysteme der eingangs genannten Art werden üblicherweise dazu eingesetzt, ein zu dosierendes Medium, typischerweise ein flüssiger bis zähflüssiger Dosierstoff, gezielt zu dosieren. Im Rahmen der sogenannten "Mikrodosiertechnik" ist es dabei oftmals erforderlich, dass sehr geringe Mengen des Dosiermediums bzw. Dosierstoffs punktgenau, und zwar berührungslos, d. h. ohne einen direkten Kontakt zwischen dem Dosiersystem und einer Zieloberfläche, auf eine Zieloberfläche aufgebracht werden. Ein solches kontaktloses Verfahren wird häufig auch als "Jet-Verfahren" bezeichnet. Ein typisches Beispiel dafür ist die Dosierung von Klebstoffpunkten, Lötpasten etc. bei der Bestückung von Leiterplatinen oder anderen elektronischen Elementen oder die Aufbringung von Konverter-Materialien für LEDs.

Eine wichtige Anforderung besteht dabei darin, die Dosiermedien hochgenau, das heißt zum richtigen Zeitpunkt, am richtigen Ort und in einer genau dosierten Menge auf die Zieloberfläche zu befördern. Dies kann beispielsweise durch eine tröpfchenweise Abgabe des Dosiermediums über eine Düse des Dosiersystems erfolgen. Ein bevorzugtes Verfahren ist hierbei ein Ausstoß von einzelnen Tröpfchen in einer Art "Ink-Jet-Verfahren", wie es in ähnlicher Form u. a. auch in Tintenstrahldruckern genutzt wird. Die Größe der Tröpfchen bzw. die Menge des Mediums pro Tröpfchen sind dabei durch den Aufbau und die Ansteuerung sowie durch die dadurch erzielte Wirkung der Düse möglichst genau vorherbestimmbar.

Zur Abgabe des Mediums aus dem Dosiersystem kann in der Düse des Dosiersystems ein bewegliches Ausstoßelement (in der Regel ein Stößel) angeordnet sein. Der Stößel kann im Inneren der Düse mit relativ hoher Geschwindigkeit in Richtung einer Düsenöffnung, also in einer Dosierrichtung nach vorne gestoßen bzw. bewegt werden, wodurch ein Tropfen des Mediums ausgestoßen wird, und anschließend wieder zurückgezogen werden.

Üblicherweise kann der Stößel zudem in eine Verschlussstellung gebracht werden, indem er in der Düse an einem Dichtsitz der Düsenöffnung fest anschließt und dort vorübergehend verbleibt. Bei zähflüssigeren Dosiermedien kann es auch ausreichen, dass der Stößel einfach in der Rückzugsstellung, d. h. vom Dichtsitz entfernt verbleibt, ohne dass ein Tropfen des Mediums aus der Düsenöffnung austritt.

Die vorliegende Erfindung kann bei allen vorgenannten Varianten unabhängig vom konkreten Ausstoßprinzip eingesetzt werden, d. h. bei einem Jet-Verfahren, einem offenen Ink-Jet-Verfahren oder auch mit einem klassischen Verschlusselement.

Aufgrund des Bestrebens, stetig eine höhere Maschinenproduktivität bzw. Arbeitsgeschwindigkeit zu erreichen, besteht inzwischen eine weitere Anforderung darin, die Dosiermedien immer schneller, also beispielsweise die Tröpfchen mit einer hohen Ausstoßfrequenz, also in rascher zeitlicher Abfolge auf die Zieloberfläche aufzubringen.

Dabei entstehen Schwingungen, die sich von den dynamisch angeregten Komponenten im Dosiersystem auf das gesamte Dosiersystem ausbreiten können. Da es sich bei dem Dosiersystem um ein schwingungsfähiges System handelt, werden die Erregungen in der Struktur dieses Systems gegebenenfalls verstärkt. Insbesondere kann dabei eine Eigenfrequenz des Systems angeregt werden. Bei Übereinstimmung von Eigenfrequenz und Erregerfrequenz werden Resonanzschwingungen erzeugt, die für unerwünschte Relativbewegungen sorgen, die das Dosierverhalten, insbesondere die Dosiergenauigkeit und Dosierqualität, negativ beeinflussen können.

Aus der Praxis bekannte Dosiersysteme können derartig gewünschte Ausstoßfrequenzen überhaupt nur theoretisch fahren. Versuche haben gezeigt, dass die derzeit bekannten Dosiersysteme bei den angestrebten Ausstoßfrequenzen nicht mehr stabil und reibungslos im Rahmen der geforderten Qualitätskriterien arbeiten können. Sowohl die Dosierqualität als auch die Dosiergenauigkeit nehmen derart ab, dass es damit nicht möglich ist, bei den vorgesehenen Dosierfrequenzen ein zufriedenstellendes Dosierergebnis zu erreichen.

Um dieses Problem zu adressieren, werden in der Praxis oft Vorspannfedern, also Federn zur direkten Vorspannung der Aktoren eingesetzt. Eine Konstruktion mit Aktoren, die mit solchen Vorspannfedern vorgespannt sind, ist beispielsweise aus der KR 101 301 107 B1 bekannt. Bei hoher dynamischer Belastung erwärmen sich die Komponenten, insbesondere die Aktoren und Rahmenbestandteile ungleichmäßig sowie unterschiedlich stark. Daraus resultiert eine abweichende Lage des Verschlusselements zur Düse und damit eine Abweichung des Dosierergebnisses. Zusätzlich kann es bei hohen Anregungsfrequenzen zu Eigenresonanzen der dynamisch mitschwingenden Vorspannfedern kommen, die daraufhin ebenfalls den Dosiervorgang negativ beeinflussen. In den gewünschten hohen Frequenzbereichen kann also es aufgrund dessen beispielsweise zu Interferenz und/oder Resonanzeffekten kommen, welche auf kurze Sicht das Dosierergebnis negativ beeinflussen und auf lange Sicht zu vermehrter Reibung bzw. erhöhter Abnutzung der betreffenden Komponenten führen.

Es ist daher eine Aufgabe der vorliegenden Erfindung, bekannte Dosiersysteme zu verbessern, insbesondere ein besonders schnelles Dosiersystem anzugeben, mit dem eine höhere Dosierfrequenz bei einer hohen Dosiergenauigkeit und Dosierqualität von Dosiermedien auf einem Werkstück erreicht wird.

Diese Aufgabe wird durch ein Dosiersystem nach Patentanspruch 1 gelöst.

Das erfindungsgemäße Dosiersystem zur Dosierung eines Dosiermediums auf einem Werkstück bzw. Substrat umfasst wie eingangs genannt eine Rahmengehäuseeinheit. Mit einer Rahmengehäuseeinheit ist ein "rahmenartig" einfassendes Gehäuse des Dosiersystems gemeint, also ein Gehäuse, welches einen überwiegenden Teil der Komponenten des Dosiersystems, wie z. B. eine später noch erläuterte Bewegungsmechanik des Dosiersystems, umseitig einschließt. Die Rahmengehäuseeinheit ist aus funktionalen Gründen relativ massiv und träge ausgeführt, da sie als stabiles Widerlager bzw. als träge Fassung des Dosiersystems fungiert, um insbesondere die dynamischen Komponenten des Dosiersystems, wie die eben genannte Bewegungsmechanik relativ dazu federnd lagern zu können, wie weiter unten noch erläutert wird.

Die Rahmengehäuseeinheit ist derart konzipiert, d. h. entsprechend träge bzw. massiv, dass sie bei den hohen Schwingungs- bzw. Bewegungsfrequenzen der Bewegungsmechanik kaum bis überhaupt nicht anspricht, sich also statisch relativ zur dynamischen Bewegungsmechanik verhält. Indem sie das gesamte Dosiersystem damit beruhigt, sorgt sie für ein gleichbleibend gutes Dosierverhalten.

Sie kann dabei vorzugsweise eine erste Hauptmasse des Dosiersystems mit tiefer Eigenfrequenz bilden, die für einen Frequenzbereich der sich dynamisch, hochfrequent bewegenden, leichteren Einzelkomponenten der Bewegungsmechanik des Dosiersystems möglichst unempfindlich ist, d. h. möglichst nicht zum Schwingen angeregt wird, so dass also ein Interferenz-bedingtes Aufschwingen bzw. Nachschwingen des gesamten Dosiersystems im Dosierbetrieb aufgrund der unterschiedlichen Schwingungsfrequenzen nahezu ausgeschlossen ist.

Wie eingangs ebenfalls bereits genannt, umfasst das erfindungsgemäße Dosiersystem weiter eine an der Rahmengehäuseeinheit gelagerte Hebellagereinheit mit wenigstens einer Hebelauflage für einen Hebel des Dosiersystems. Die Hebellagereinheit ist insoweit vorteilhaft von der Rahmengehäuseeinheit getrennt, da sie gegen ein Verkippen bzw. Verdrehen konstruktiv geschützt ist, sich jedoch entlang einer Achse in einer Tiefenrichtung bzw. Dosierrichtung relativ zum Rahmen verschieben lässt. Diese Verschiebung wird durch die piezoelektrischen Aktoren verhindert, welche zwischen der Rahmengehäuseeinheit und der Hebellagereinheit federtechnisch über die Hebellagereinheit verspannt sind. Dadurch wird erreicht, dass eine thermisch gleiche Veränderung der beiden piezoelektrischen Aktoren und/oder eine thermische Veränderung der Rahmengehäuseeinheit zu einer relevanten Veränderung des Abstands zwischen Düse und Ausstoßelement führen, wie später noch erläutert wird.

Dabei ist die Hebellagereinheit bevorzugt teilweise innerhalb, teilweise außerhalb der Rahmengehäuseeinheit, also an der Rahmengehäuseeinheit gelagert angeordnet.

Bei der Hebelauflage der Hebellagereinheit handelt es sich um einen ersten Drehlagerteil eines Drehlagers, welches ein Teil der Bewegungsmechanik ist. Das Drehlager bzw. Kipplager wird aus Hebelauflage und Hebel gebildet und überträgt die Kraft, welche für den Dosierbetrieb von den zwei Aktoren wechselweise erzeugt wird, indirekt auf das anzutreibende Ausstoßelement. Das Ausstoßelement, welches auch bei der vorliegenden Konstruktion der Erfindung vorzugsweise ein Stößel sein kann, befördert daraufhin nach einem der eingangs erläuterten Dosierverfahren bzw. Dosierarten ein Dosiermedium zumindest portionsweise aus der Düse.

Wortsinngemäß dient die Hebelauflage dabei einer Auflagerung des Hebels, der mittels der Hebelauflage drehbar bzw. verkippbar um eine Kippachse des Kipplagers gelagert ist, so dass sich der Hebel in einer vorgesehenen Dosierrichtung des Dosiersystems relativ zur Kippachse aus einer anfänglichen Ruhelage, nämlich einer horizontalen Mittelposition bewegen lässt bzw. zumindest um einen gewissen, die Hublänge definierenden Winkel verkippen lässt. Die Kippachse oder auch Rotationsachse, auf der der Hebel kippbar gelagert ist, verläuft entsprechend ebenfalls horizontal, jedoch senkrecht zum Hebel bzw. zu einer Längsrichtung des Hebels.

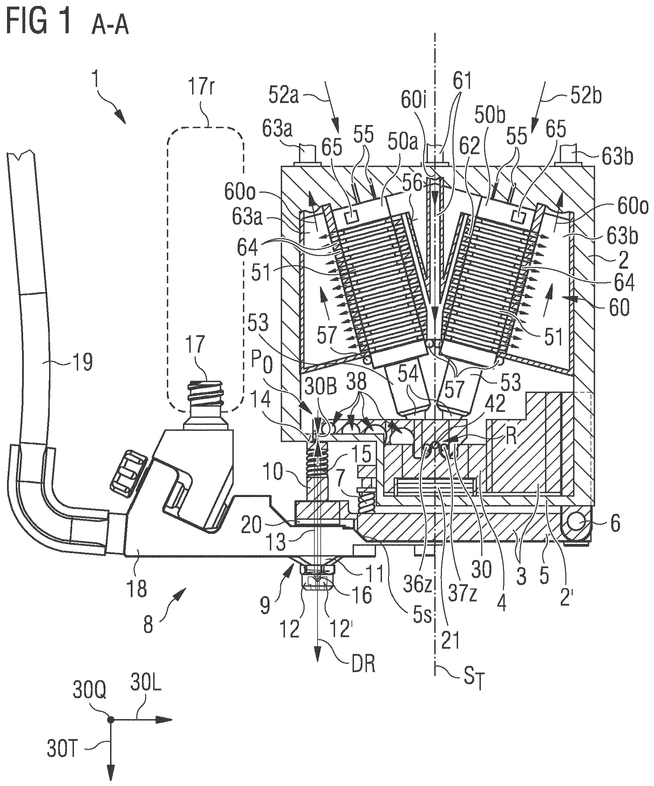

Relative Richtungsangaben wie "oben", "unten", "oberseitig", "unterseitig", "seitlich", "links", "rechts", "längsseitig" etc. beziehen sich hier willkürlich auf die Darstellung in den weiter unten noch beschriebenen Figuren, wenngleich das Dosiersystem im Betrieb überwiegend in der in Figur 1 dargestellten Orientierung verwendet bzw. eingesetzt wird. Damit ist gemeint, dass eine Dosierung auf ein Werkstück beim Jet-Verfahren meistens so erfolgt, dass die dosierten Tropfen im Wesentlichen mit der Schwerkraft ein Stück im freien Fall bzw. Flug auf das Werkstück treffen, also eine Dosierung in Dosierrichtung bzw. in einer Tiefenrichtung nach unten erfolgt.

Mit dem Hebel ist im weitesten Sinne einfach ein mechanischer Kraftwandler gemeint, der aus einem starren Körper besteht, der wie üblich um einen Drehpunkt, nämlich die Kippachse drehbar gelagert ist. Der Hebel des erfindungsgemäßen Dosiersystems umfasst dabei einen sich im Wesentlichen in einer Längsrichtung erstreckenden, zweiseitigen bzw. zweiarmigen Hebelarm. "Im Wesentlichen in einer Längsrichtung" meint, dass sich der Hebel wenigstens in einer hauptsächlichen Erstreckungsrichtung, nämlich einer längsverlaufenden Umlenkrichtung zwischen Ausstoßelement und Aktoren durch das Dosiersystem erstreckt. Der Hebel ist aber grundsätzlich ein dreidimensionales Bauteil, welches sich zumindest anteilig auch in die beiden anderen orthogonalen Raumrichtungen erstreckt. Beispielsweise kann er sich in einer Querrichtung (parallel zur Kippachse) zwischen zwei Seitenflächen oder in einer Tiefenrichtung (senkrecht zur Kippachse und zur Längsachse), in Richtung der Hebelauflage zumindest insoweit erstrecken, dass er in diesen Richtungen zumindest einen Bruchteil seiner hauptsächlichen Erstreckungsrichtung in Längsrichtung misst.

Wie allgemein üblich bezeichnet der Begriff "Hebelarm" auch hier den Teil (bzw. die Länge) eines Hebels, der von einer Kippachse bzw. einer Drehachse des Hebels bis zu einem Angriffspunkt reicht, an dem die Kraft am Hebel wirkt bzw. angreift. Ein zweiseitiger bzw. zweiarmiger Hebelarm weist entsprechend zwei solche Teile bzw. Hebelarme mit je einem Angriffspunkt auf, an dem jeweils eine Kraft am Hebel angreift. Die Hebelarme können im Folgenden auch als Hebelarmseiten des Hebelarms des Hebels bezeichnet sein. Die jeweiligen Entfernungen der Angriffspunkte zur gemeinsamen Drehachse werden auch als Hebelarmlängen bezeichnet. Prinzipiell gilt, je größer die Entfernung eines Angriffspunkts zur Kippachse, also je größer die Hebelarmlänge, desto geringer kann die Kraft ausfallen, um eine entsprechend größere Kraft bei entsprechend kürzerer Hebelarmlänge auszugleichen.

Beim erfindungsgemäßen Dosiersystem weist ferner eine der Hebelarmseiten des zweiseitigen Hebelarms kippachsennah eine erste Aktorangriffsstelle auf, also einen ersten Punkt, an dem die Kraft angreift. Kippachsenfern an einem Endabschnitt steht die betreffende Hebelarmseite mit dem bereits oben genannten Ausstoßelement mit einer Düse des Dosiersystems in Kontakt. Auf das Ausstoßelement überträgt sich wiederum bestimmungsgemäß die Bewegung des Hebels in Dosierrichtung des Dosiersystems. Die Begriffe "kippachsennah" und "kippachsenfern" sind dabei relativ aufeinander zu beziehen. Eine kippachsennahe Anordnung meint also lediglich, dass die betreffende Komponente näher an der Kippachse angeordnet ist, als eine kippachsenfern angeordnete Komponente.

Die andere Hebelarmseite weist kippachsennah ebenfalls eine zweite Aktorangriffsstelle auf - also einen zweiten Punkt, an dem die Kraft im Wechsel zum ersten Punkt angreift, wie im Folgenden erläutert wird. Kippachsenfern auf der Hebelarmseite mit der zweiten Aktorangriffsstelle (entfernt vom Ausstoßelement) kann die betreffende Hebelarmseite symmetrisch zur anderen Hebelarmseite ausgebildet sein, z. B. einfach ins Leere laufen. Bevorzugte Ausgestaltungsformen bzw. Weiterbildungen des Hebels werden später noch erläutert.

Weiterhin umfasst das erfindungsgemäße Dosiersystem zwei Aktoren, die im Betrieb gegenläufig ein Kippmoment an der ersten und zweiten Aktorangriffsstelle auf den Hebel ausüben.

Unter einem Kippmoment ist im Rahmen der Erfindung einfach ein Drehmoment zu verstehen, das dafür sorgt, dass der Hebel um einen gewissen Winkel verkippt und damit das in Kontakt stehende Ausstoßelement entsprechend wie vorgesehen zur Dosierung bewegt wird. Der hier verwendete Begriff des Kippmoments bezieht sich aber nicht auf ein klassisches Kippmoment, bei dem ein damit beaufschlagter Körper ab diesem bestimmten Kippmoment kippt bzw. umkippt. Das Kippen bezieht sich vielmehr wörtlich auf das Verkippen des Hebels um einen bestimmten Winkel zur Horizontalen bzw. zu einer Mittelposition, in welcher sich der Hebel zumindest anfänglich vor Inbetriebnahme bzw. zu einem Zeitpunkt, in dem die Aktoren gerade stromlos geschaltet sind, befindet.

Unter den obigen Aktorangriffsstellen sind jeweils zumindest einzelne Punkte bzw. Aktorkontaktstellen im Sinne von Kontakt- bzw. Angriffspunkten der Aktoren am Hebel gemeint, an denen die Aktoren am Hebel angreifen bzw. mit dem Hebel in Kontakt stehen. Aktorangriffsstellen können aber auch aus einer Mehrzahl von Punkten, einer Linie oder einer Fläche bestehen. Beispielsweise können die Aktorangriffsstellen als zwei längliche, quer zum Hebel sowie senkrecht zu den Wirkungsrichtungen der Aktoren verlaufende Angriffslinien bzw. Aktorkontaktstellen ausgebildet sein. Dies bietet sich an, um die Rotationsbewegung bzw. Kippbewegung des Hebels relativ zur Hebelauflage lediglich auf die vorgesehene Kippbewegung um die Kippachse zur Bewegung des Ausstoßelements in einer gewünschten Dosierrichtung zu beschränken. Damit können nahezu keine weiteren Rotationskomponenten entstehen, die z. B. zusätzlich Reibung bzw. Abnutzung im System hervorrufen könnten. Bevorzugte Ausgestaltungsformen der Aktoren werden ebenso später noch erläutert.

Erfindungsgemäß sind die Aktoren des eingangs genannten Dosiersystems V-förmig schräg zueinander gestellt. Unter "schräg zueinander gestellt" ist gemeint, dass die Aktoren frontseitig schräg in einer gemeinsamen Ebene aufeinander zulaufen bzw. schräg auf einen gemeinsamen Punkt jenseits bzw. hinter der Kippachse gerichtet sind. In einem weiter unten noch erläuterten Ausführungsbeispiel sind sie beispielweise auf einen Punkt unterhalb der horizontalen Ebene der Kippachse des Kipplagers aus Hebelauflage und Hebel gerichtet.

Jedenfalls ist mit "schräg zueinander gestellt" aber vor allem gemeint, dass die Aktoren bzw. deren Wirkungsrichtungen in einem Winkel kleiner 180°, aber größer 0° zueinander gestellt bzw. ausgerichtet sind. Die Erfindung wendet sich also davon ab, dass die Aktoren exakt entgegengesetzt oder parallel bzw. antiparallel zueinander ausgerichtet sind, wie weiter unten noch genauer erläutert wird.

Des Weiteren bilden die Hebellagereinheit (mit der Hebelauflage), der Hebel und die beiden Aktoren gemeinsam eine Bewegungsmechanik. welche Bewegungsmechanik erfindungsgemäß mittels zumindest eines Federelements an der Rahmengehäuseeinheit verspannt ist.

Die Bewegungsmechanik ist dabei so konzipiert, dass sie das Ausstoßelement des Dosiersystems wie gewünscht besonders hochfrequent in eine longitudinale Ausstoß- und Rückzugsbewegung in und entgegen der Dosierrichtung, d. h. bei einer normalerweise üblichen Anordnung nach unten oder oben, versetzen kann. Dazu kann das Ausstoßelement an einer Betätigungsstelle, z. B. der Stößel an einem Stößelkopf, mit der Bewegungsmechanik strukturell verbunden bzw. gekoppelt sein oder mittels einer Feder, wie z. B. einer Torsionsfeder, dagegen vorgespannt sein, also z. B. lediglich in Druckkontakt stehen. Die Kopplung erfolgt jedenfalls derart, dass das von den Aktoren erzeugte Kippmoment - typischerweise eine einfache lineare Auslenkung bzw. Linearbewegung - im Wechsel bzw. wechselweise vom Hebel (als Ausstoß- oder Rückzugsbewegung) über eine Kontaktfläche des Hebels auf das Ausstoßelement, vorzugsweise einen Stößelkopf des Stößels, zur Abgabe des Dosiermediums aus der Düse übertragen wird.

Bei dem Federelement kann es sich beispielsweise um wenigstens eine Druckfeder handeln. Es kann mit in etwa 3-4 kN vorgespannt werden, d. h. die Bewegungsmechanik gegen die Rahmengehäuseeinheit federnd verspannen. Dabei können die beiden Aktoren beispielsweise mit je 1,5 bis 2 kN, vorzugsweise 1,8 kN vorgespannt bzw. vorbelastet sein. Bevorzugte Ausgestaltungen des Federelements werden später noch erläutert.

Mit der erfindungsgemäßen Konstruktion des Gegenstands der Erfindung wird erreicht, dass eine höhere Ausstoßfrequenz des Dosiersystems bei gleichbleibend guter Dosiergenauigkeit und Dosierqualität gefahren werden kann. Zudem kann mit der erfindungsgemäßen Konstruktion auf jeweils eine dynamisch belastete Rückstellfeder an den beiden Aktoren verzichtet werden, welche Rückstellfedern nämlich nicht bei allen Frequenzen stabil arbeiten, da sie zu Wobbelbewegungen bzw. ungewollten Schwingungen des Systems führen können, insbesondere bei schneller bzw. hochfrequenter Dosierung, wie sie bei der Erfindung ja gewünscht ist.

Mit der insgesamt gefederten Vorspannung der Bewegungsmechanik gegen die Rahmengehäuseeinheit wird erreicht, dass dynamische Schwingungen im dynamischen System bleiben, wobei die insgesamt gefederte Vorspannung nicht zum Bestandteil des dynamischen Systems gehört. Etwaige individuelle thermische Effekte durch unterschiedliche lokale Erwärmung der einzelnen Dosiersystembestandteile (Piezoaktoren, Rahmengehäuseeinheit, Hebel, etc.) wirken sich zudem nicht individuell - wie bisher im Stand der Technik üblich - auf den Abstand zwischen Ausstoßelement und Düse aus, sondern werden weitestgehend kompensiert. Die Dosiergenauigkeit und Dosierqualität des gesamten Dosiersystems kann daher zumindest durch derartige Effekte nicht mehr nennenswert beeinflusst werden.

Die erfindungsgemäße Konstruktion des Gegenstands der Erfindung, insbesondere die Schrägstellung der Aktoren in einer gemeinsamen Ebene, ermöglicht zudem eine engere bzw. nähere Lage der Angriffspunkte der Aktoren beidseitig um den Drehpunkt des Hebels, welcher Hebel über seinen Hebelarm wiederum das Ausstoßelement zur Dosierung bewegt. Indem damit der Hebel kleiner und leichter gestaltet werden kann und folglich ein geringeres Trägheitsmoment aufweist, lassen sich höhere Beschleunigungen und damit ein schnelleres Dosieren mit dem erfindungsgemäßen Dosiersystem durchführen.

Als weiterer Vorteil lässt sich insbesondere auch die Größe der Tröpfchen bzw. die Menge des Mediums pro Tröpfchen noch weiter reduzieren. Weiterhin können damit im selben Zeitintervall größere Flächen mit einem Dosiermedium benetzt werden. Insbesondere für eine kontaktlose Dosierung geringer Mengen eines Dosiermediums bzw. Dosierstoffs - also mikrodosiert, sehr punktgenau und berührungslos, d. h. ohne einen direkten Kontakt zwischen dem Dosiersystem und einer Zieloberfläche - auf eine Zieloberfläche, nämlich beim Jet-Verfahren bzw. einer Dosierung mittels Jet-Verfahrens, ist die erfindungsgemäße Konstruktion besonders geeignet.

Weitere, besonders vorteilhafte Ausgestaltungen und Weiterbildungen der Erfindung ergeben sich aus den abhängigen Ansprüchen sowie der nachfolgenden Beschreibung, wobei auch einzelne Merkmale verschiedener Ausführungsbeispiele bzw. Varianten zu neuen Ausführungsbeispielen bzw. Varianten kombiniert werden können.

Zur Erhöhung der Ausstoßfrequenz des Dosiersystems gibt es verschiedene Möglichkeiten. Beispielsweise kann die Bewegungsmechanik, insbesondere der Hebel, optimiert bzw. verbessert ausgestaltet werden.

Grundsätzlich könnten die zueinander schräg gestellten Aktoren auf beiden Längsseiten des Hebels beispielsweise an einem Endabschnitt eines Hebelarms des Hebels angreifen. Hierzu könnte auf zwei gegenüberliegenden Längsseiten des Hebels jeweils eine Aktorangriffsstelle ausgebildet sein.

Vorzugsweise können sich die beiden Aktoren auf einer gemeinsamen Längsseite des Hebels befinden, so dass sie im Wesentlichen aus einer gemeinsamen Richtung am Hebel angreifen können. Entsprechend können die erste Aktorangriffsstelle und die zweite Aktorangriffsstelle auf derselben Längsseite des Hebels ausgebildet und angeordnet sein. Bei einer normalen Anordnung des Dosiersystems (mit der Dosieröffnung nach unten gerichtet) handelt es sich bei der besagten Längsseite - beispielsweise beim später noch genauer beschriebenen Ausführungsbeispiel - um eine längsverlaufende Oberseite des Hebels. Somit üben sie nur auf einer Längsseite des Hebels gegenläufig bzw. wechselweise ein Kippmoment auf den Hebel aus, belasten also den Hebel nur einseitig. Außerdem steht somit auf der gegenüberliegenden (in der Regel unteren) Längsseite des Hebels ausreichend Platz für die Hebelauflage zur Verfügung, was für einen besonders platzsparenden kompakten Aufbau des Dosiersystems insgesamt sorgt. Zudem ermöglicht die Anordnung der Aktoren auf einer Längsseite des Hebels, dass die Hebelauflage und der Hebel gleichzeitig mittels des oben bereits erwähnten Federelements gegen die Aktoren verspannt werden können, somit also die Bewegungsmechanik als "dynamische" Einheit gegen die Rahmengehäuseeinheit als "statische" Einheit schwingungsberuhigend vorgespannt ist.

Für die Stellung der Aktoren zum Hebel gibt es bevorzugte Möglichkeiten. So könnte beispielsweise ein Aktor senkrecht am Hebel angreifen, wobei der andere Aktor schräg am Hebel ansteht, so dass die beiden Aktoren jedenfalls schräg zueinander gestellt sind.

Die Aktoren sind jeweils im selben Winkel zu einer gemeinsamen Winkelhalbierenden bzw. Symmetrieachse (eines gedachten "V" aus den Aktoren) angeordnet, wobei die Winkelhalbierende bzw. Symmetrieachse senkrecht auf der Oberseite des Hebels steht. Von einer Längsseite aus betrachtet können die Aktoren also derart V-förmig angeordnet sein, dass sie mittels einer gedachten Spiegelung an der Symmetrieachse bzw. Winkelhalbierenden in Deckung gebracht werden könnten. Räumlich betrachtet können die Aktoren derart V-förmig angeordnet sein, dass sie mittels einer gedachten Spiegelung an einer Symmetrieebene aus der besagten Symmetrieachse sowie einer senkrecht dazu horizontal zwischen den Aktoren hindurch verlaufenden Symmetrieachse in Deckung gebracht werden könnten, wie anhand eines Ausführungsbeispiels später noch erläutert wird.

Besonders bevorzugt können die Aktoren derart V-förmig zueinander schräg gestellt angeordnet sein, dass die Längsrichtung des Hebels bzw. Hebellängsachse in einer durch die Wirkungsrichtung bzw. Längsachse der Aktoren aufgespannten virtuellen Ebene liegt bzw. die Kippachse des Hebels senkrecht auf dieser virtuellen Ebene steht. Praktischerweise lässt sich das Dosiersystem damit trotz der zueinander schräg gestellten Aktoren (in einer Querrichtung senkrecht zur Längsrichtung des Hebels) äußerst flach gestalten, nämlich ähnlich flach wie bei den Konstruktionen bei denen - wie bisher üblich - nur ein Aktor oder zwei parallele Aktoren verbaut sind.

Grundsätzlich lassen sich die Aktoren dabei im Winkelbereich zwischen zwei Extremalstellungen - nämlich einer parallelen, nebeneinander verlaufenden Stellung einerseits und einer entgegengesetzten Frontalstellung, d. h. wenn die Aktoren in einer Linie bzw. gemeinsamen Flucht von verschiedenen Seiten auf den Hebel und aufeinander zu laufen - (exklusive der besagten Extremalstellungen) schräg zueinander auf einer Längsseite des Hebels achsensymmetrisch zur gemeinsamen Winkelhalbierenden anordnen.

Nach einem bevorzugten Ausführungsbeispiel der Erfindung können die Aktoren, genauer gesagt deren Längsachsen bzw. Wirkungsrichtungen, V-förmig maximal bzw. höchstens in einem 150° Winkel zueinander gestellt bzw. angeordnet sein. Weiter bevorzugt können sie höchstens in einem 120° Winkel und noch weiter bevorzugt höchstens in einem 90° Winkel zueinander ausgerichtet sein. Besonders bevorzugt können sie höchstens in einem 60° Winkel und ganz besonders bevorzugt höchstens in einem 30° Winkel zueinander schräg gestellt sein.

Winkel kleiner 20°, insbesondere kleiner 10° lassen sich dann nur noch mittels eines entsprechend kleineren Querschnitts der Aktoren oder mittels einer entsprechenden Verlängerung und Ausdünnung der Übertrager der Aktoren erreichen. Bei einem Winkel von 20° hieße "entsprechend kleiner" beispielsweise, dass der halbe Querschnitt eines jeden Aktors in jedem Fall weniger als 10° ausmachen darf. Die angesprochene Verlängerung hingegen würde zwangsläufig zu einer deutlichen Vergrößerung des Gehäuses bzw. des Dosiersystems führen, was wiederum die Konstruktion größer und anfälliger hinsichtlich Biegebruchfestigkeit macht.

Nichtsdestotrotz könnte es, sofern die genannten Nachteile keine Relevanz haben, auch erwünscht sein, dass die Aktoren vorzugsweise höchstens in einem Winkel von 20° und besonders bevorzugt höchstens in einem Winkel von 10° zueinander schräg gestellt sind.

Wie allgemein bekannt gilt dabei: Je steiler die Aktoren zueinander gestellt sind, d. h. also je kleiner der gemeinsame Winkel zwischen ihnen ist, desto mehr Kraft wird auf den Hebel übertragen, da sie sozusagen "senkrechter" am Hebel anstehen respektive der Anteil der Querkräfte sinkt. Gleichzeitig sorgt eine steilere Anordnung aber auch dafür, dass die Aktoren an der Spitze zunehmend weiter auseinandergerückt bzw. beabstandet voneinander angeordnet werden müssen, da sie sich aufgrund ihrer Abmessungen selbst im Wege stehen bzw. blockieren, insbesondere aufgrund ihrer Quererstreckung bzw. ihres Durchmessers senkrecht zu ihrer Längsachse. Demzufolge entfernen sich die Aktorangriffsstellen bei zunehmend steilerer Stellung mehr und mehr voneinander bzw. von der dazwischenliegenden Kippachse, bis sie bei einer parallelen Stellung mindestens im Abstand ihres Durchmessers bezogen auf ihre zentralen Längsachsen voneinander beabstandet sind, wie dies im Stand der Technik nachteilig der Fall ist. Der Kraftarm eines Aktors bei paralleler Anordnung zweier Aktoren entspricht dabei dem halben Durchmesser eines Aktors.

Da bei piezoelektrischen Aktoren die erzielbare mechanische Energie vom Aktorvolumen, d. h. Querschnitt bzw. Durchmesser sowie Länge des Aktors, abhängt, besitzen dünnere Aktoren weniger Kraft als gleichlange dickere Aktoren. Hinzu kommt, je dünner die Aktoren gestaltet sind, desto instabiler werden sie und desto unberechenbarer ist ihr Verhalten (siehe hierzu "Knickstabproblematik" oder auch "Biegebruchfestigkeit"). Es hilft demnach aus besagten Gründen auch nicht weiter, dünnere, entsprechend längere Aktoren zu verwenden, um den Kraftarm zu reduzieren, um wiederum die Hebelauslenkung zu vergrößern.

Je weiter weg bzw. entfernt von der Kippachse die Aktoren nämlich am Hebel angreifen, desto weniger Hub bzw. Hebelauslenkung lässt sich mit ihrer längenbedingten fixen Hublänge des jeweiligen Aktors auf den Hebel übersetzen bzw. übertragen. Denn die Hublänge eines Aktors - bei einer Bauart mit gestapelten Piezoelementen, also eines "Piezostapelaktors" - ist abhängig von seiner spezifischen Länge (und damit bei einer gegebenen Länge beschränkt). Daher kann durch eine optimale Wahl der Position, also der Aktorangriffsstelle, an der der jeweilige Aktor am Hebel angreift, vorteilhaft trotz beschränkter Hublänge des Aktors selbst mittels des Hebels die mögliche Hebelauslenkung vergrößert werden, um damit eine größere Hubbewegung als die eigentliche Hublänge des Aktors zu erzielen. Dabei gilt, je näher an der Kippachse angegriffen wird, desto größer die Hebelauslenkung, desto mehr Kraft wird aber auch aufgrund des kürzeren Kraftarms benötigt.

Mit einer Schrägstellung, im Vergleich zu einer parallelen Anordnung zweier Aktoren - bei gleicher Ausführung der Aktoren - lassen sich die Aktoren näher an der Kippachse anordnen, so dass also eine größere Hebelauslenkung erzielt werden kann.

Die Aktoren des Dosiersystems können auf verschiedene Weise realisiert sein, wobei insbesondere bei Anwendungen, die eine hochfeine Dosierungsauflösung erfordern, bevorzugt Piezoaktoren Verwendung finden. Piezoaktoren, die auch als piezoelektrisch betriebene Aktoren bezeichnet werden, haben gegenüber anderen Arten von Aktoren, z. B. hydraulisch, pneumatisch und/oder elektromagnetisch betriebenen Aktoren, den Vorteil der sehr präzisen und vor allem schnellen Steuerbarkeit. Vorteilhafterweise zeichnen sich Piezoaktoren durch äußerst kurze Reaktions- bzw. Ansprechzeiten aus, welche üblicherweise deutlich unter den entsprechenden Werten von anderen Aktorprinzipien liegen. Ein weiterer Vorteil besteht darin, dass Piezoaktoren gegenüber anderen Arten von Aktoren vergleichsweise wenig Bauraum innerhalb eines Dosiersystems beanspruchen. Somit bieten Piezoaktoren eine effiziente Lösung für den Betrieb von Dosiersystemen, insbesondere bei hochfeinen Dosierungsanforderungen.

Bei piezoelektrischen Stapelaktoren ist es grundsätzlich so, dass sie nur einen eher geringen Hub, dafür aber verhältnismäßig hohe Kräfte erzeugen können. Beispielsweise kann ein Piezostapel von 36 mm Länge eine Hublänge von 50 µm erzielen. In der Regel gilt es daher den geringen Hub so zu übersetzen, dass er deutlich größer wird, wobei natürlich die Kraft entsprechend abnimmt.

Alternativ kann es sich bei den Aktoren auch um magnetostriktive Aktoren handeln. Diese nutzen das Prinzip, dass sich die Dipole eines ferromagnetischen Materials bei Anlegen eines äußeren magnetischen Feldes gleich, d. h. in einer gemeinsamen Orientierung ausrichten. Durch das Drehen der Dipole zur ursprünglichen Lage ändert sich die Länge des Materials abhängig vom jeweiligen Material in etwa im Bereich von mehreren µm/m bis mm/m.

Vorzugsweise kann das Dosiersystem also so ausgebildet sein, dass die Aktoren möglichst nah an der Kippachse angreifen, um eine möglichst große Hebelauslenkung zu bewirken. Da die Kraft der Aktoren konsequenterweise abnimmt und beim antreibenden Moment der Kraftarm nur in erster Potenz eingeht - wodurch sich hier ein Nachteil bei dynamischen Anwendungen, z. B. wenn das Dosiersystem in einer Dosieranlage dynamisch zum Dosieren relativ zum Werkstück verfahren wird, ergibt - ist es von Vorteil, die Abmessungen des Hebels bzw. generellen Hebelmaße möglichst klein zu gestalten, um ein schnelleres Dosiersystem zu erhalten. Denn aufgrund der Drehimpulserhaltung lässt sich ein Hebel mit geringerem Massenträgheitsmoment schneller "drehen" bzw. um die Rotationsachse bzw. Kippachse hin und her bewegen, als ein Hebel mit größerem Massenträgheitsmoment.

Da das Massenträgheitsmoment in der zweiten Potenz vom Abstand des jeweiligen Massepunktes (des Hebels) zum Drehpunkt bzw. zur Kippachse abhängig ist, steigt es überproportional mit der Länge des Hebels (und damit den Abständen der Massepunkte vom Drehpunkt) an.

Auch das Massenträgheitsmoment des Hebels kann bei gegebenem Übersetzungsverhältnis (Kraft zu Kraftarm) kleiner ausfallen, indem die Aktoren erfindungsgemäß zueinander schräg gestellt angeordnet werden, da so der Abstand der Kraftarme zum Drehpunkt bzw. die Länge der Kraftarme geringer wird, was wiederum die Ausbildung eines kleineren Hebels ermöglicht. Ein kleinerer Hebel, folglich ein kleineres Massenträgheitsmoment, führt also in letzter Konsequenz zu einer höheren Resonanzfrequenz des Dosiersystems mit zueinander schräg gestellten Aktoren als bei einem System mit parallelen Aktoren gleicher Bauart.

Es ist also für eine schnellere Bewegung des Hebels von Vorteil, mehr Masse näher an der Kippachse zu zentrieren.

Vorzugsweise kann der Hebel daher eine inhomogene Massenverteilung aufweisen. Inhomogen meint, dass die Masse des Hebels nicht symmetrisch bzw. gleichmäßig über seine Länge in Längsrichtung verteilt ist, sondern der Hebel zumindest bezogen auf seine Masse asymmetrisch aufgebaut ist.

Besonders bevorzugt kann auch eine Masse des Hebels derart entlang des Hebels relativ zur Kippachse verteilt sein, dass der Hebel insgesamt bezogen auf die Kippachse ein möglichst geringes (Massen-)Trägheitsmoment aufweist. Es wird also bei der Konstruktion vorzugsweise auch dafür gesorgt, dass sich möglichst viel Masse nahe des Drehpunkts und möglichst wenig Masse fern vom Drehpunkt, also im länglichen Ausleger zum Ausstoßelement hin, befindet.

Dabei kann das Gewicht des Hebels aber vorzugsweise nur gerade so viel reduziert bzw. zum Drehpunkt verteilt werden, dass er noch eine ausreichend hohe Stabilität aufweist, welche u. a. ein besonders schnelles Schwingen des Hebels erlaubt. Beispielsweise kann der Hebel in Aufsicht, d. h. von oben betrachtet, im Umriss im Wesentlichen "Iöffelförmig" ausgebildet sein, wobei dann ein überwiegender Teil der Masse nahe des Drehpunkts in einem "ovalen" bzw. "runden" Teil um den Drehpunkt herum positioniert ist.

Vorzugsweise kann der Hebel eine Mehrzahl von Ausnehmungen, besonders bevorzugt querverlaufende bzw. in Querrichtung des Hebels verlaufende Durchgangsbohrungen, zur Gewichtsreduzierung aufweisen.

Vorzugsweise können die Aktorangriffsstellen am Hebel für die Aktoren nicht in einer horizontalen Ebene der Kippachse liegen bzw. angeordnet sein. D. h., dass sie sich also nicht in derselben Ebene wie die Kippachse befinden, in der ja die Kippachse liegt.

Gerade in einem dynamischen Fall (z. B. wenn das Dosiersystem in einer Dosieranlage dynamisch zum Dosieren relativ zum Werkstück verfahren wird), wenn der Hebel aufgrund der Kippmomente der Aktoren um die Kippachse um einige Grade verkippt wird, wird mit der außerebenen Anordnung der Aktorangriffsstellen am Hebel vorteilhaft erreicht, dass die Aktoren bei der Ausübung des Kippmoments (in Form einer longitudinalen Auslenkung) auf den Hebel nur möglichst kleine Quer- bzw. Scherbewegungen senkrecht zur Wirkungsrichtung der Aktoren ausführen.

Bei größeren Querbewegungen, also Richtungskomponenten quer zur Wirkungsrichtung bzw. Querkomponenten ergibt sich nämlich bei einer eigentlich geradlinigen Auslenkung in Wirkungsrichtung eine deutlich bogenförmige Pendelbewegung der Aktoren entlang eines Drehkreises bzw. Kreises um die Kippachse durch die beiden Aktorangriffsstellen der Aktoren am Hebel. Mittels einer Reduzierung der Querkomponenten wird die Pendelbewegung geradliniger. Damit wird möglichst vermieden, dass die Aktoren, die ja eine sehr hohe Masse aufweisen, bei ihrer longitudinalen Auslenkung in Wirkungsrichtung quer dazu pendeln und damit ungewünschte Schwingungseffekte und/oder eine höhere Abnutzung der Komponenten verursachen.

Grundsätzlich können die Aktorangriffsstellen oberhalb der Kippachse des Hebels, beispielsweise direkt an der Oberfläche der Oberseite des Hebels ausgebildet sein, so dass die Aktoren dort am Hebel angreifen.

Um die Aktorangriffsstellen bei einer zueinander schräg gestellten Anordnung der Aktoren noch näher an der Kippachse anordnen zu können, kann der Hebel vorzugsweise derart ausgebildet und angeordnet sein, dass die beiden Aktorangriffsstellen weiter entfernt von einer zu den Aktoren weisenden Oberseite bzw. Längsseite des Hebels im Hebel positioniert bzw. versenkt sind als die Kippachse, an welcher Kippachse der Hebel wie erwähnt auf der Hebelauflage drehbar bzw. verkippbar gelagert aufliegt. "Weiter entfernt von einer zu den Aktoren weisenden Oberseite bzw. Längsseite des Hebels" meint, dass die Aktorangriffsstellen bei einer bestimmungsgemäßen Anordnung des Hebels auf der Hebelauflage weiter entfernt von den Piezoelementen der Aktoren bzw. tiefer im Hebel angeordnet sind als die Kippachse. Die Aktoren sind also derart angeordnet, dass sie mit ihrer Front bzw. ihrer Spitze jeweils zunächst an der Kippachse vorbeilaufen, also die horizontale Ebene der Kippachse passieren bzw. durchlaufen und dann erst an den vertieft ausgebildeten Aktorangriffsstellen unterhalb der tatsächlichen Kippachse am Hebel angreifen bzw. erst dort mit dem Hebel in Kontakt stehen.

Die jeweiligen Aktorangriffsstellen der beiden Aktoren können also jeweils parallel zur gemeinsamen Kippachse in gleicher Weise bzw. identisch versetzt angeordnet sein. Bei einem alternativen bevorzugten Ausführungsbeispiel könnten die Aktoren auch jeweils auf eine in Querrichtung bzw. parallel zur Längsrichtung versetzte Aktorangriffsstelle des Hebels wirken.

Bevorzugt können die V-förmig am Hebel angeordneten bzw. anschlagenden Aktoren derart ausgerichtet sein bzw. an den Aktorangriffsstellen angreifen, dass jeweils in einer horizontalen Mittelposition des Hebels eine Längsachse der Aktoren im Wesentlichen senkrecht auf einer jeweiligen Verbindungslinie zwischen der betreffenden Aktorangriffsstelle und der gemeinsamen Kippachse steht.

Mit anderen Worten greifen die Aktoren also an den Aktorangriffsstellen um die Verbindungslinie versetzt, im rechten Winkel zur Kippachse, an. Die Mittelposition des Hebels entspricht dabei einer Position bzw. Stellung des Hebels, in welcher der Hebel horizontal steht und beide Aktoren gerade unbestromt bzw. stromlos geschaltet sind.

Die Aktoren können damit an den Aktorangriffsstellen des Hebels V-förmig, jeweils in einer an der Kippachse vorbeilaufenden Wirkungsrichtung angreifen, in der sie also derart angeordnet bzw. schräg gestellt sind, dass ihre Wirkungsrichtung tangential auf dem Kreis um die zentrale Kippachse des Hebels durch die beiden Aktorangriffsstellen der Aktoren am Hebel steht (bzw. senkrecht auf der Verbindungslinie von der jeweiligen Aktorangriffsstelle zur Kippachse, insbesondere zur Oberfläche der die Kippachse bildenden Zylinderstifte, wie in einem Ausführungsbeispiel später noch erläutert wird), um somit Querbewegungen bzw. einen Queranteil der Pendelbewegungen der Aktoren entlang des Kreises bzw. einer Bogenlänge des Kreises - entlang derer die Aktorangriffsstellen bewegt bzw. verfahren werden - möglichst gering zu halten, wenn sich die Aktoren vor- und zurückbewegen, d. h. die Piezoelemente ausdehnen bzw. zusammenziehen.

An dieser Stelle sei darauf hingewiesen, dass mikroskopisch betrachtet nicht die Mittelachsen der Zylinderstifte exakt die Kippachse darstellen, sondern die Verbindung der Mantelflächen der Zylinderstifte (die unterseitig fest in der Hebelauflage sitzen) jeweils mit den etwas größeren zylindrisch ausgesparten Mantelflächen des Hebels, welche tangential gegeneinandergedrückt werden, so dass die Mantelflächen des Hebels beim Kippen eine minimale Rollbewegung auf den Mantelflächen der Zylinderstifte ausführen. In dem Sinne liegt also keine exakte Kippachse, sondern eine komplexere Bewegung vor. Näherungsweise können die Mittelachsen der Zylinderstifte hier aber zumindest bei einer makroskopischen Betrachtung in etwa mit der Kippachse gleichgesetzt werden.

Mit anderen Worten können die Aktoren vorzugsweise also derart tangential an einem Kreis um die Kippachse an den Aktorangriffsstellen angeordnet sein, dass sie im Betrieb zur Dosierung eines Dosiermediums bei einer Ausstoß- und Rückzugsbewegung im Wesentlichen eine geradlinige Bewegung durchführen. "Im Wesentlichen" heißt hierbei, dass die Aktoren bei einer Ausstoß- und Rückzugsbewegung eine geradlinige Bewegung ohne nennenswerte Querbewegung auf dem Kreis im Sinne einer Pendelbewegung durchführen. Mit der besagten tangentialen Anordnung ist gemeint, dass die Längsachsen bzw. Wirkungsrichtungen der Aktoren tangential am Kreis um die Kippachse an den Aktorangriffsstellen anliegen, wie bereits oben erläutert wurde.

Für die weitere Ausgestaltung des Dosiersystems gibt es bevorzugte Möglichkeiten.

Bevorzugt kann die Hebellagereinheit mehrteilig ausgebildet sein.

Besonders bevorzugt kann sie zusätzlich zur bereits erläuterten Hebelauflage eine Fluidikpositionierung für eine Fluidikeinheit des Dosiersystems umfassen. Diese Fluidikeinheit des Dosiersystems kann ebenso an die Hebellagereinheit gekoppelt sein.

Dabei kann die Hebelauflage ganz besonders bevorzugt über ein außerhalb der Rahmengehäuseeinheit liegendes Drehgelenk mit der Fluidikpositionierung drehbar, gelenkig bzw. verkippbar verbunden sein.

Alternativ oder zusätzlich können die Hebelauflage und die Fluidikpositionierung mechanisch verstellbar gegeneinander gelagert sein, also im Sinne von drehbar bzw. verkippbar oder verschiebbar, beispielsweise mittels eines Verstellelements im Winkel relativ zum Drehgelenk verstellbar.

Vorzugsweise kann die Hebellagereinheit eine Ringkonstruktion umfassen, welche unter Belassen mindestens eines Spalts einen Abschnitt der Rahmengehäuseeinheit ringartig umschließt. Unter einem "Spalt" wird hier wie üblich eine einen Zwischenraum bildende schmale, längliche Öffnung verstanden. "Ringkonstruktion" bzw. "ringartig" meint eine Konstruktion aus zwei Bauteilen, die in der Art eines Rings geformt bzw. aufgebaut, d. h. konstruktiv ausgestaltet sind. Die Ringkonstruktion bezeichnet also ein ringförmiges Gebilde bzw. eine ringförmige Anordnung, bei der die beiden Bauteile zu einem in sich geschlossenen Ring kreisförmig verbindbar sind. Bei dem Abschnitt der Rahmengehäuseeinheit kann es sich beispielsweise um einen Gehäuseboden der Rahmengehäuseeinheit handeln.

Besonders bevorzugt kann die Hebellagereinheit mittels des Federelements, welches vorzugsweise in einem Spalt zwischen der Hebellagereinheit und dem Abschnitt der Rahmengehäuseeinheit angeordnet ist, verschiebbar an der Rahmengehäuseeinheit gelagert sein.

Alternativ oder zusätzlich kann die Ringkonstruktion ein Drehgelenk umfassen. Wenn das Dosiersystem wie zuvor beschrieben aufgebaut ist, kann es sich bei dem Drehgelenk um das obige Drehgelenk handeln.

Dabei kann die Hebelauflage der Hebellagereinheit über den Hebel und den Stößel zur Einstellung des Stößel-Düsen-Abstandes an einer drehgelenkfernen Seite der Fluidikpositionierung mittels eines Verstellelements, insbesondere einer Stellschraube, - unter Belassen mindestens eines Spalts zur Rahmengehäuseeinheit das Federelement ringartig in die Ringkonstruktion der Hebellagereinheit einschließend gegen sich selbst - mit der Fluidikpositionierung mechanisch einstellbar gekoppelt sein. Bei der Stellschraube kann es sich beispielsweise auch um eine Feingewindeschraube handeln, mit welcher eine Position des Stößels in der Düse, d. h. der Stößel-Düsen-Abstand noch genauer feinjustiert bzw. eingestellt werden kann.

Mit der "drehgelenkfernen Seite" ist hier wenigstens ein Abschnitt entlang der Fluidikpositionierung (vom Drehgelenk zum Stößel) gemeint, welcher sich auf einer stößelseitigen Hälfte jenseits der Mitte der Fluidikpositionierung, also möglichst nahe am Stößel befindet.

Ungeachtet der oben genannten Vorteile zu Piezoaktoren stellen Piezoaktoren Bauteile dar, in denen große Verlustleistungen umgesetzt werden, was eine starke Erwärmung des piezoelektrischen Materials verursachen kann, wobei das piezoelektrische Material selbst aufgrund seiner spezifischen Curie-Temperatur thermische Begrenzungen aufweist und auch die jeweiligen Kontaktierungen der Elektroden thermische Grenzen haben.

Um einer Aufheizung der Bewegungsmechanik, insbesondere der Piezoaktoren zusätzlich entgegenzuwirken, können beide Piezoaktoren sämtlich mit komprimierter Raumluft bzw. Pressluft umströmt ausgeführt sein, da in den meisten Dosiersystem-Anlagen ohnehin Pressluft zur Verfügung steht.

Sofern mittels dieser Druckluft bzw. Pressluft beispielsweise aufgrund einer höheren Umgebungstemperatur im Einsatzgebiet des Dosiersystems nicht genug Wärme von den Piezoaktoren abgeführt werden kann, um die Piezoaktoren sowie andere temperatursensible Bereiche des Dosiersystems dauerhaft unterhalb einer für den präzisen Betrieb des Dosiersystems kritischen Temperatur zu halten, kann die Aktoren vorzugsweise jeweils eine Gas-, vorzugsweise Luft-, oder Flüssigkeit-durchströmte Kühleinrichtung umgeben.

Dabei kann die Kühleinrichtung bevorzugt einen Zuführkanal zwischen den Aktoren mit einer Anzahl an Einlässen in die Aktoren und zwei außermittige Abführkanäle mit einer Anzahl an Auslässen in die Abführkanäle aufweisen. Die Kühleinrichtung kann dabei als ein weitestgehend geschlossener Kreislauf ausgebildet sein, d. h. es wird ein kühler Kühlstrom in das Dosiersystem eingeleitet, welcher unter Reduzierung der Temperatur der Bewegungsmechanik Wärme aufnimmt und anschließend wieder aus dem Dosiersystem abgeführt wird.

Mit dieser Ausführung der Kühleinrichtung aus einem Zuführkanal bei zwei Abführkanälen kann ein Staudruck in der Kühleinrichtung verringert werden. Der Zuführkanal kann beispielsweise mittig, im Wesentlichen parallel zu den Aktoren verlaufen. Bevorzugt kann er aber in der die Aktoren umgebenden Rahmengehäuseeinheit integriert sein. Die beiden Abführkanäle können auf den voneinander abgewandten Außenseiten der Aktoren, jeweils gegenüber dem Zuführkanal ausgebildet und angeordnet sein, so dass der Kühlstrom sehr leicht zur Aufnahme von Wärme jeweils an den Aktoren kontinuierlich im Betrieb vorbeigeführt werden kann.

Der Hebel und die Hebelauflage der Bewegungsmechanik können dabei beispielsweise nicht gesondert angeströmt, sondern lediglich von der Abluft der Piezoaktoren mit umströmt werden.

Nach einer vorteilhaften Ausgestaltung der Erfindung können die Aktoren zusätzlich jeweils gekapselt ausgebildet sein. Beispielsweise können die Aktoren in einer im Wesentlichen zylindrischen Kapselung beweglich mit ausreichend Spiel eingefasst sein.

Damit lassen sich die Aktoren mit einem parallel entlang ihrer Längserstreckung um die Kapselung strömenden Kühlstrom beaufschlagen. Bei dem Kühlmedium des Kühlstroms kann es sich beispielsweise um ein Gas, wie z. B. Luft, Stickstoff etc., oder aber auch um eine flüssige bis zähflüssige Flüssigkeit, z. B. Kühlflüssigkeit, handeln, soweit diese eine ausreichend hohe Fließgeschwindigkeit zur Abführung der Wärme der gekapselten Aktoren aufweist.

Es ist ebenfalls denkbar, dass der Spalt bzw. Zwischenraum zwischen den gekapselten Aktoren und dem Gehäuse vorzugsweise mit einer weichen aber wärmeleitenden Masse gefüllt ist, so dass die Abwärme der Aktoren direkt an die Rahmengehäuseeinheit abgegeben werden kann und dort über die Außenfläche an die Umgebung oder mit einer erzwungenen Konvektion, etwa mit einem Lüfter, in gesteigerter Form an die Umgebung abführbar ist.

Alternativ oder zusätzlich können die Aktoren jeweils zumindest einen Temperatursensor umfassen, um die Erwärmung der Aktoren zu messen bzw. überwachen und gegebenenfalls die Betriebsgeschwindigkeit zur Senkung der betriebsbedingten Erwärmung der Komponenten entsprechend zu regeln. Bei vorhandener Kapselung kann der Temperatursensor innerhalb oder außerhalb der Kapselung angeordnet sein. Mittels der gemessenen Temperaturdaten des Temperatursensors lässt sich die Position des Stößels in der Düse der Ventilkammer bzw. Düsenkammer bei Bedarf, vorzugsweise automatisch gesteuert, feinjustieren, so dass der Stößel auch bei sich verändernder Temperatur stets in der Mittelposition des Hebels die Düse des Ventils - je nachdem, welches der oben genannten Verfahren eingesetzt wird - entweder exakt verschließt (Stößelspitze im Dichtsitz) oder die Düse gerade geöffnet (Stößelspitze im Abstand zur Düse) ist.

Vorzugsweise kann die Kopplung zwischen der Bewegungsmechanik und dem Stößel eine feststellbare Kopplung sein. Das bedeutet, die beiden Komponenten können für den Betrieb vorzugsweise miteinander formschlüssig verbunden, wie z. B. verschraubt, verklickt, verrastet werden, besonders bevorzugt zusätzlich zu einer Vorspannung, die die Komponenten ohnehin kontinuierlich kontaktiert.

Wie erwähnt kann die Rahmengehäuseeinheit mit den daran fix verbundenen Komponenten vorzugsweise eine "erste Hauptmasse" des Dosiersystems bilden. Vorzugsweise kann die Bewegungsmechanik mit den Aktoren, dem Hebel und der Hebellagereinheit einen zweiten, hauptsächlichen Massenanteil der Gesamtmasse des Dosiersystems vereinen, d. h. - ggf. in Verbindung mit weiteren Komponenten, wie z. B. einer Fluidikeinheit - eine "zweite Hauptmasse" des Dosiersystems bilden.

Zur Verbesserung des generellen Dosierergebnisses bzw. zur Beruhigung der dynamischen Komponenten des Dosiersystems kann eine Gesamtmasse des Dosiersystems im Wesentlichen gleichmäßig, d. h. im Wesentlichen zu gleichen Anteilen, auf die Rahmengehäuseeinheit und die Hebellagereinheit aufgeteilt sein. Durch eine sinnvolle Verteilung der Gesamtmasse des Dosiersystems auf die zwei in etwa gleich großen "Hauptmassen" kann dafür gesorgt werden, dass das gesamte, schwingfähig gekoppelte System überhaupt nicht erst auf die hochfrequenten Schwingungen der Bewegungsmechanik anspricht.

Um die Bewegungsmechanik insgesamt gegen die Rahmengehäuseeinheit federnd zu lagern, kann das Federelement vorzugsweise ein Tellerfederpaket sein. Das Tellerfederpaket kann dabei besonders bevorzugt eine Anzahl an Einzelfedertellern und/oder Federpaketen aufweisen. Dabei können auch unterschiedliche Einzelfederteller und/oder Federpakete zu einem Tellerfederpaket kombiniert realisiert sein. Mit dem Tellerfederpaket lässt sich also die Bewegungsmechanik vorspannen, um das thermische Verhalten, wie z. B. temperaturbedingte Verformungen etc. der Aktoren zu kompensieren.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Die Figuren sind in der Regel nicht maßstäblich und lediglich als schematische Darstellung zu verstehen. Es zeigen:
Figur 1 einen teilweisen Längsschnitt (entlang der Schnittlinie A-A gemäß Figur 2) eines Ausführungsbeispiels eines erfindungsgemäßen Dosiersystems, mit Blick ins Innere eines Gehäuses des Dosiersystems,
Figur 2 eine Draufsicht auf das Ausführungsbeispiel aus Figur 1, der besseren Übersichtlichkeit und Einsicht wegen ohne Gehäuse,
Figur 3 eine vergrößerte, isolierte Draufsicht auf einen Hebel des Ausführungsbeispiels aus Figur 1,
Figur 4 einen Längsschnitt entlang der Schnittlinie B-B durch den Hebel gemäß Figur 3,
Figur 5 eine vergrößerte, perspektivische, teilweise transparente Teilansicht zweier am Hebel anstehender Aktoren gemäß Figur 1.

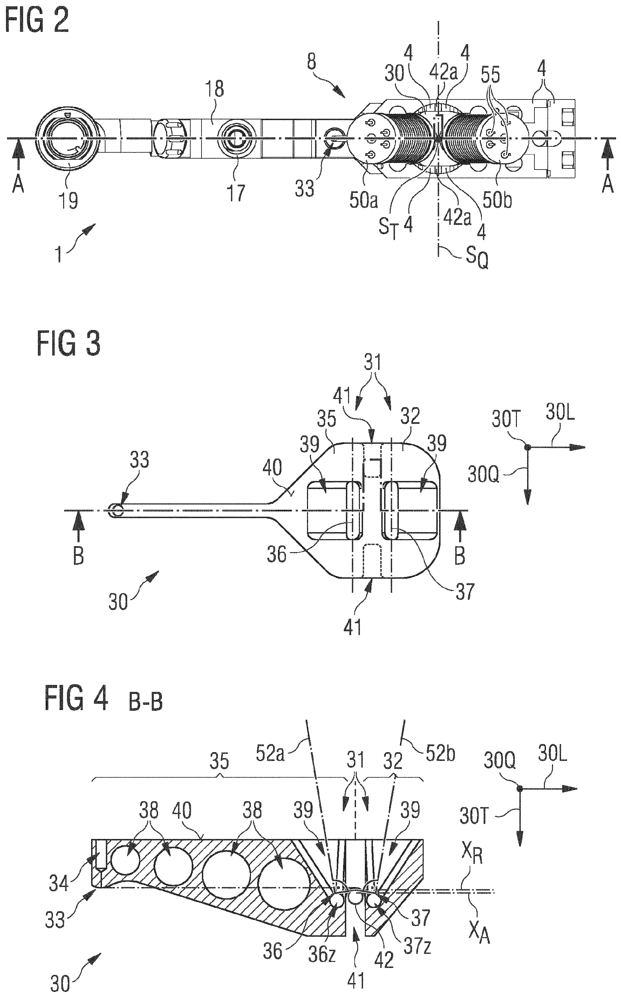

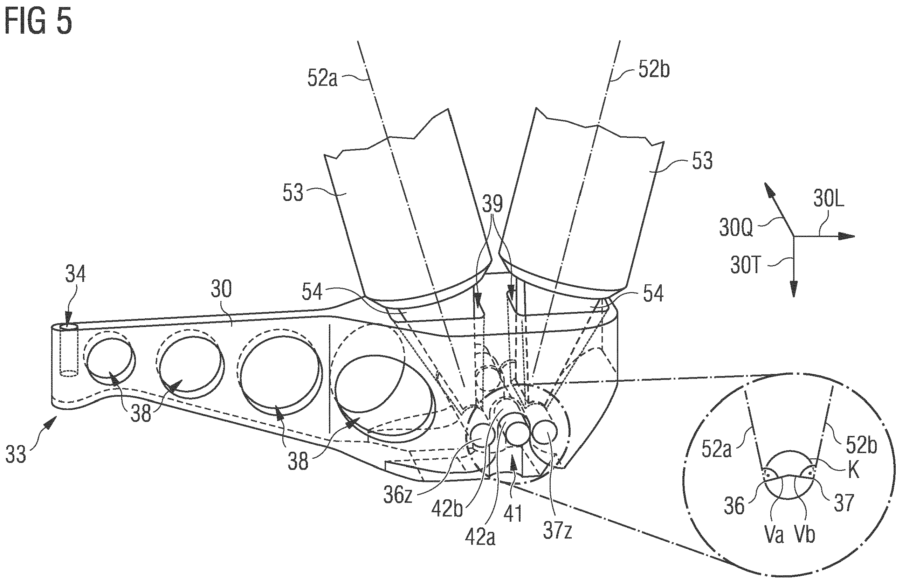

Figur 1 zeigt eine Gesamtansicht eines ersten Ausführungsbeispiels eines erfindungsgemäßen Dosiersystems 1 zur Dosierung eines Dosiermediums auf einem Werkstück in einem teilweisen Längsschnitt durch das Dosiersystem 1 entlang einer zumindest überwiegend längs in einer Längsrichtung 30L (in Figur 1: horizontal bzw. linksrechts) durch das Dosiersystem 1 verlaufenden Schnittlinie A-A. Diese Schnittlinie A-A ist in Figur 2 in einer Draufsicht bzw. Aufsicht auf das Dosiersystem 1 gezeigt. Sie verläuft mittig durch das Dosiersystem 1, insbesondere durch einen Hebel 30 des Dosiersystems 1, aber springt in einem Bereich des Hebels 30 zwischen zwei sogenannten Aktorangriffsstellen 36, 37 zweier Aktoren 50a, 50b am Hebel 30 in einer Querrichtung 30Q (welche in Figur 1 in die Zeichenebene hinein und in Figur 2 nach oben verläuft) des Hebels 30 in eine außermittige, parallele Schnittebene. Damit ist zumindest einer der beiden dezentralen, eine Rotationsachse R bzw. Kippachse R des Hebels 30 bildenden Zylinderstifte 42 (siehe Figur 5) des Dosiersystems 1 zu sehen. Die übrige in Figur 1 vertikal verlaufende Richtung des Dosiersystems 1 ist im Folgenden auch gleichbedeutend als Tiefenrichtung 30T des Hebels 30 aufgeführt. In dieser Richtung verläuft auch eine in Figur 1 gezeigte Achse bzw. Symmetrieachse S_{T} mittig zwischen den beiden zu dieser Achse S_{T} bzw. zueinander schräg gestellten Aktoren 50a, 50b, wobei die Symmetrieachse S_{T} dabei die erwähnte Kippachse R vertikal schneidet. In Figur 2 verläuft diese Symmetrieachse S_{T} entsprechend in die Zeichenebene hinein. Senkrecht zur besagten vertikalen Symmetrieachse S_{T} der Aktoren 50a, 50b verläuft eine horizontale Achse bzw. Symmetrieachse S_{Q}, hier in Figur 2 von oben nach unten bzw. umgekehrt. Gemeinsam bilden die Achsen S_{T} und S_{Q} eine Symmetrieebene S_{Q}, S_{T}, relativ zur der die Aktoren 50a, 50b gemeinsam ein symmetrisches "V" bilden. Die zuvor bereits erwähnte Schnittlinie A-A durchläuft das Dosiersystem 1 im Übrigen senkrecht durch die Symmetrieebene S_{Q}, S_{T}.

Neben einer das Dosiersystem 1 weitestgehend rundherum einfassenden, statischen Rahmengehäuseeinheit 2 gehören zu den Hauptkomponenten der Erfindung eine dynamische Bewegungsmechanik 3, 4, 5, 30, 50a, 50b (nämlich eine Hebellagereinheit 3 mit einer Hebelauflage 4 und einer Fluidikpositionierung 5, der oben bereits erwähnte Hebel 30 und zwei Aktoren 50a, 50b), ein Federelement 21, hier als Tellerfederpaket 21 ausgebildet, welches die dynamische Bewegungsmechanik 3, 4, 5, 30, 50a, 50b gegen die statische Rahmengehäuseeinheit 2 verspannt bzw. vorspannt, sowie eine mit der Fluidikpositionierung 5 der Hebellagereinheit 3 koppelbare Fluidikeinheit 8 (Erläuterung weiter unten), welche unter anderem eine mit dem Hebel 30 in Kontakt stehende Ventileinheit 9 mit einer Düse 12 zur Dosierung des Dosiermediums in einer Dosierrichtung DR (hier nach unten) umfasst. Zur besseren Unterscheidung bzw. Trennung ist die statische Rahmengehäuseeinheit 2 in Figur 1 von links oben nach rechts unten schraffiert, wohingegen die dynamische Bewegungsmechanik 3, 4, 5, 30, 50a, 50b bis auf die zwei Aktoren 50a, 50b von links unten nach rechts oben schraffiert ist.

Bei der Hebelauflage 4 handelt es sich um einen innerhalb der Rahmengehäuseeinheit 2 befindlichen Teil der zumindest zweiteiligen Hebellagereinheit 3 des Dosiersystems 1. Bei der Fluidikpositionierung 5 handelt es sich um einen außerhalb der Rahmengehäuseeinheit 2 befindlichen Teil der Hebellagereinheit 3. Die beiden Teile 4, 5 sind u. a. über ein Drehgelenk 6 außerhalb der Rahmengehäuseeinheit 2 drehbar miteinander verbunden. Die im Wesentlichen längliche Fluidikpositionierung 5 verläuft dabei vom Drehgelenk 6 (in Figur 1 rechts, unterhalb der Rahmengehäuseeinheit 2) aus, in einem Abstand, parallel entlang der Rahmengehäuseeinheit 2 bzw. eines, vorzugsweise lösbar koppelbaren, Gehäusebodens 2' der Rahmengehäuseeinheit 2 (also parallel entlang der innenseitig an der Rahmengehäuseeinheit 2 federnd gelagerten Hebelauflage 4) und lässt sich mittels eines Verstellelements 7, hier einer Stellschraube 7 zur Einstellung der Vorspannung eines Ausstoßelements 13, hier eines Stößels 13 gegen die Hebelauflage 4 ziehen. Zusammen bilden die beiden Teile 4, 5 somit eine Art Ringkonstruktion bzw. Ring, welcher Ring den zuvor genannten Gehäuseboden 2' der Rahmengehäuseeinheit 2 (wie später noch erläutert) und das Federelement 21 ringartig umgreift bzw. einschließt.

Zwischen einem Endabschnitt 33 des Hebels 30 und der Fluidikpositionierung 5 ist die oben bereits erwähnte Ventileinheit 9 eingesetzt. Die Ventileinheit 9 umfasst wiederum einen hohlzylindrischen Ventilkörper 10, in dem der Stößel 13 beweglich geführt ist. Zwischen dem Ventilkörper 10 und einem endseitigen Stößelkopf 14 am entgegengesetzten Ende einer Stößelspitze 16 des Stößels 13 ist dabei eine Stößelfeder 15 angeordnet, so dass der Stößel 13 federnd gelagert ist. Mittels der Stellschraube 7 lässt sich somit der Abstand zwischen der Düse 12 und dem Endabschnitt 33 des Hebels 30 verändern, was ein genaues Einstellen einer Stößelendlage bezogen auf einen Düseneinsatz 12' ermöglicht und somit ein sicheres Schließen des Dosiersystems 1 ermöglicht. Die Stellschraube 7 weist dabei eine Feingewindespindel mit einer Schraubendruckfeder auf, um eine Feinjustierung des Abstands zwischen der Hebelauflage 4 und der Fluidikpositionierung 5 vornehmen zu können. Mit der Stellschraube 7 lässt sich also ein genaues Einstellen des Dosiersystems 1 auf die Eigenschaften der Düse 12 und des Stößels 13 gewährleisten, so dass mögliche Fertigungstoleranzen oder auch ein Verschleiß ausgleichbar sind.

Im Bereich der Ventileinheit 9 umfasst die Fluidikpositionierung 5 zudem eine in die Fluidikpositionierung 5 integrierte Heizeinrichtung, welche von der Elektronik der Ventileinheit 9 versorgt und geregelt wird. Die Heizeinrichtung umfasst selbst wiederum eine Heizpatrone und einen Sensor, um das Dosiermedium für die Dosierung bei Bedarf zu heizen bzw. wärmen.

Neben der beschriebenen Ventileinheit 9 umfasst die mit der Fluidikpositionierung 5 lösbar gekoppelte Fluidikeinheit 8 einen Dosiermedien-Versorgungsanschluss 17 zur ausreichenden sowie stetigen Versorgung bzw. Zuführung eines Dosiermediums für das Dosiersystem 1 aus einem Reservoir 17r, hier z. B. einer Dosierstoffkartusche 17r in die Ventilkammer 11. Zwischen dem Dosiermedien-Versorgungsanschluss 17 und der Ventilkammer 11 verläuft hierzu innenliegend in der Fluidikeinheit 8 ein (nicht dargestellter) Medium-Zuführkanal bzw. medienführender Kanal.

Wie Figur 1 zu sehen, beinhaltet die Fluidikeinheit 8 ebenfalls eine Heizeinrichtung, nämlich eine Heizungseinheit 18 mit einer zweiten Heizzone entlang des medienführenden Kanals und einem Heizungselement 20 im Düsenbereich bzw. an der Düsenkammer 11 der Ventileinheit 9. Die Heizungseinheit 18 wird dazu über einen Anschluss 19 bzw. ein Heizungskabel 19 versorgt. Somit ist auch bei einer rein passiven, also nicht selbst beheizten und geregelten Fluidikeinheit, eine Temperierung im Düsenbereich möglich. Zusätzlich kann damit insbesondere auch der medienführende Kanal temperiert werden, so dass eine Vorwärmung des Dosiermediums verbessert werden kann, was vor allem bei großen Volumenströmen von Vorteil ist.

Nahe des Heizungselements 20 an einer drehgelenkfernen Schnittstelle 5s der Fluidikpositionierung 5 ist die oben bereits erwähnte Fluidikeinheit 8 lösbar angebracht, die ihrerseits wiederum einen Medium-Zuführkanal vom Dosiermedien-Versorgungsanschluss 17 zur Ventilkammer 11 der Ventileinheit 9 aufweist, um kontinuierlich Dosiermedium aus einem Reservoir 17r, hier z. B. einer Dosierstoffkartusche 17r über den Dosiermedien-Versorgungsanschluss 17 und den Medium-Zuführkanal in die Ventilkammer 11 zu leiten.

Mit dem Dosiersystem 1 wird im Betrieb ein gewünschtes Dosiermedium portionsweise vom Reservoir 17r aus einer Düse 12 der Ventilkammer 11 auf ein Werkstück aufgetragen. Dazu wird bei der Dosierung durch einen Öffnungsquerschnitt der Düse 12 bzw. eines Düseneinsatzes 12' in der Düse 12 zumindest ein in der Menge exakt dosierbarer Tropfen eines gewünschten Dosiermediums bzw. Dosierstoffs in einer Dosierrichtung DR abgegeben. Dies kann mittels einer schnellen Bewegung bzw. Stößelbewegung 30B des Stößels 13 indirekt über den Hebel 30 gesteuert und angetrieben durch die gegengleich arbeitenden Aktoren 50a, 50b erfolgen. Der wechselbare Düseneinsatz 12' in der Düse 12 der Ventilkammer 11 dient dabei dazu, die Dosiermenge und Form des Tropfens noch spezifischer für unterschiedliche Anwendungsgebiete einstellen zu können.

Im Folgenden werden nun die übrigen Komponenten innerhalb der Rahmengehäuseeinheit 2 beschrieben.

Dasjenige die Bewegungsmechanik 3, 4, 5, 30, 50a, 50b in der Rahmengehäuseeinheit 2 verspannende (oben bereits erwähnte) Federelement 21 steht innerhalb der Rahmengehäuseeinheit 2 unten am Gehäuseboden 2' der Rahmengehäuseeinheit 2 an und verspannt dabei den auf der Hebelauflage 4 drehbar um die Rotationsachse R gelagerten Hebel 30 über die zwei am Hebel 30 nahe der Kippachse R anstehenden Aktoren 50a, 50b gegen einen oberen Abschnitt bzw. Rahmen der Rahmengehäuseeinheit 2. Mit der Verspannung werden die beiden Piezoelektrischen Aktoren über die Hebellagereinheit vorgespannt, was zur Vermeidung von Zugspannungen im dynamischen Betrieb erforderlich ist. Gleichzeitig werden dynamische Schwingungen aufgrund der relativ dazu trägen Masse der Rahmengehäuseeinheit 2 stark abgeschwächt und thermische Unterschiede bzw. Temperaturgradienten - die aufgrund der sehr dynamisch arbeitenden Bewegungsmechanik 3, 4, 5, 30, 50a, 50b entstehen können - von der Rahmengehäuseeinheit 2 des Dosiersystems 1 entkoppelt und mit der Ventileinheit 9 gekoppelt bzw. gleichgestellt. Dadurch haben diese Effekte nahezu keinen Einfluss auf den Dosierungsprozess des Dosiermediums aus einer Düse 12 der Ventileinheit 9. Im hier dargestellten Ausführungsbeispiel des erfindungsgemäßen Dosiersystems 1 ist das Federelement 21 ein Tellerfederpaket 21 mit beispielsweise vier vertikal über einander gelagerten Einzelfedertellern, die untereinander federnd gelagert sind und deren Federkräfte sich addieren. Die Konstruktion wird flächig zusammengepresst, was eine hohe Dämpfung des Tellerfederpakets bewirkt und somit auch wieder zu einer Verringerung der Schwingungsneigung der Rahmengehäuseeinheit gegen die Hebellagereinheit führt.

Das Federelement 21 kann an der Unterseite wie bereits erwähnt mit dem Gehäuseboden 2', z. B. Blech, Platte etc., der Rahmengehäuseeinheit 2 verbunden, hier z. B. verschraubt sein. Es kann also einseitig, hier unterseitig, fest gekoppelt sein. Alternativ könnte das Federelement aber auch nur zwischengeklemmt sein.

Damit die beiden Teile 4, 5 in einem Abstand bzw. mit einem Abstandspalt zum Gehäuseboden 2' das Tellerfederpaket 21 ringförmig bzw. ringartig einschließend bzw. umgreifend gegeneinander verspannt werden können, weist der Gehäuseboden 2' in Figur 1 rechts und links des Tellerfederpakets 21 Ausschnitte (zur Seite bzw. nach unten) auf.

Oberseitig auf dem Federelement 21 liegt die Hebelauflage 4 auf und wird wie gesagt durch die Aktoren 50a, 50b gegen das Federelement 21 gedrückt.

Die Hebelauflage 4 weist zwei seitliche (in Figur 1 in Richtung der Zeichenebene hintereinander befindliche) "Schenkel" mit nach oben halbkreisförmig geöffneten Mulden auf. Zwischen den Schenkeln ist ein an den Hebel 30 mit dem nötigen Bewegungsspielraum angepasster Innenraum zur teilweisen Aufnahme des Hebels 30 ausgebildet. In der Seitenansicht gemäß Figur 1 ist nur einer der beiden besagten Schenkel der Hebelauflage 4 sichtbar, da die beiden Schenkel - aus dieser Richtung betrachtet - hintereinanderliegen. In der Mulde des sichtbaren (hier vorderen) Schenkels ist einer der beiden die Rotationsachse R bildenden Zylinderstifte 42 (siehe Figur 5) zu erkennen. Um den Aufbau dieses Teils des Dosiersystems 1 besser erkennen zu können, nutzt auch die längs durch den isoliert dargestellten Hebel 30 verlaufende Schnittlinie B-B in Figur 3 den Schnittlinienverlauf (nach Art eines "einzelnen Rechteckpulses"), wie ihn auch die oben bereits erwähnte Schnittlinie A-A aus Figur 2 nutzt.

Wie in Figur 5 zu sehen ist, liegt jeder der besagten Zylinderstifte 42 jeweils seitlich in etwa mit einer (entlang der Zylinderstiftachse) äußeren Hälfte 42a auf einem der Schenkel der Hebelauflage 4 auf und hält (um sich drehbar) mit der anderen, inneren Hälfte 42b zugleich den Hebel 30 im Innenraum der Hebelauflage 4. Hierzu ragen die Zylinderstifte 42 jeweils in eine seitliche, quer (in einer Querrichtung 30Q) im Hebel 30 ausgebildete, U-förmig nach unten offene (nach oben geschlossene) Aussparung 41 (Erläuterung weiter unten) des Hebels 30 hinein, welche Aussparung 41 in der Aufsicht auf den Hebel 30 in Figur 3 gestrichelt angedeutet ist und in Figur 4 von der Seite gezeigt ist.

Anschaulich lässt sich die Form des Hebels 30 als ein zweiseitiger, dreidimensionaler, asymmetrischer Kraftwandler nach Art eines "Schrankenbaums" (mit Gegengewicht) beschreiben. Konkret umfasst der Hebelarm 31 des Hebels 30 in seiner Längsrichtung 30L auf in etwa einer Hälfte einen voluminösen, eher massiven, grob quaderförmigen Abschnitt und auf der anderen Hälfte einen schmalen, möglichst leicht konstruierten, länglichen Stiel bzw. "Ausleger". Eine (hier in Figur 3 rechte) Hälfte des quaderförmigen Abschnitts gehört zu einer kürzeren Hebelarmseite 32 des zweiseitigen Hebelarms 31. Die andere (hier in Figur 3 linke) Hälfte des quaderförmigen Abschnitts gehört zusammen mit dem daran anschließenden länglichen Ausleger zu einer längeren Hebelarmseite 35 des zweiseitigen Hebelarms 31. Dazwischen liegt die Rotationsachse R des Hebels 30, neben welcher die zwei Aktoren 50a, 50b der Bewegungsmechanik 3, 4, 5, 30, 50a, 50b an den Aktorangriffsstellen 36, 37 am Hebel 30 angreifen. Dabei greift ein erster (in Figur 1 und 2 linker) Aktor 50a an einer ersten (hier linken) vertieft im Innern des Hebels 30 versenkten bzw. ausgenommenen Aktorangriffsstelle 36 der ersten Hebelarmseite 35 des zweiseitigen Hebelarms 31 an und ein zweiter (hier rechter) Aktor 50b an einer zweiten (hier rechten) gleichermaßen versenkten bzw. ausgenommenen Aktorangriffsstelle 37 der zweiten Hebelarmseite 32 des zweiseitigen Hebelarms 31 an (siehe zur Lage der Aktorangriffsstellen 36, 37 auch Figuren 3 bis 5).

Die beiden Aktoren 50a, 50b stehen also bei einer normalen Anordnung des Dosiersystems 1, wie sie hier in Figur 1 dargestellt ist, auf einer (Hebel-)Oberseite 40 (in Figur 1 in Tiefenrichtung 30T oben), im quaderförmigen Abschnitt beidseitig der Rotationsachse R des Hebels 30 direkt (an jeweils einem unten noch erläuterten Zylinderstift 36z, 37z der Aktorangriffsstellen 36, 37) am Hebel 30 an.

Anhand des in Figur 5 in perspektivischer Ansicht teilweise transparent dargestellten Hebels 30 und eines Teils der beiden Aktoren 50a, 50b ist dabei gezeigt, wie die beiden Aktoren 50a, 50b bzw. deren Fronten 54 genau am Hebel 40 angreifen bzw. anstehen, um diesen bestimmungsgemäß um einige Grad um die Rotationsachse R bzw. Kippachse R zu verkippen, d. h. wie sie in ihrer jeweiligen Wirkungsrichtung 52a, 52b ein Kippmoment bzw. eine Longitudinalauslenkung auf den Hebel 30 übertragen. Wie hierzu aus dem vergrößerten Ausschnitt in Figur 5 hervorgeht, stehen die Aktoren 50a, 50b mit ihren Wirkungsrichtungen 52a, 52b tangential an einem Kreis K der Angriffspunkte (bzw. Aktorangriffsstellen 36,37) an, so dass die Wirkungsrichtungen 52a, 52b jeweils senkrecht auf einer radialen Verbindungslinie Vₐ, V_{b} zur gemeinsamen Rotationsachse R im Zentrum des Kreises K stehen. Da die Wirkungsrichtungen 52a, 52b dabei tangential am Kreis K angreifen, erzeugt eine Longitudinalauslenkung, d. h. ein Kippmoment eines jeweiligen Aktors 50a, 50b, dessen Front 54 dabei mit dem Hebel 30 um ein paar Grad minimal entlang des Kreises K um die Rotationsachse R (um die in Figur 5 dargestellte tangentiale Position bzw. Mittelposition P₀ des Hebels) bogenförmig nach unten oder nach oben wandert, nur eine minimale Querbewegung. Würden die Aktoren 50a, 50b bzw. deren Wirkungsrichtungen 52a, 52b jeweils weiter oben oder unten entlang des Kreises K angreifen, würde dieselbe Auslenkung um ein paar Grad entlang des Kreises K, eine deutliche größere Querbewegung der Front 54 des jeweiligen Aktors 50a, 50b verursachen. Diese andernfalls deutlich bogenförmigere Kreisbahnbewegung bzw. Pendelbewegung entlang des Kreises K kann mittels der tangentialen Anordnung der Wirkungsrichtungen 52a, 52b am Kreis K um die Rotationsachse R zu einer möglichst geradlinigen Longitudinalauslenkung reduziert werden.

An einer (Hebel-)Unterseite (in Figur 1 in Tiefenrichtung 30T unten) liegt der Hebel 30 im quaderförmigen Abschnitt an der Rotationsachse R zwischen den Aktorangriffsstellen 36, 37 indirekt (mit den äußeren Hälften 42a der Zylinderstifte 42) auf der Hebelauflage 4 auf und steht im Endabschnitt 33 des länglichen Auslegers mit dem Stößelkopf 14 des Stößels 13 in Kontakt. Am Endabschnitt 33 des Auslegers des Hebels 30 ist eine weitere Bohrung 34 im Hebel 30 ausgebildet. Sie dient der Einbringung eines Permanentmagneten und damit der Positionsbestimmung des Hebels 30 mit einem an der Hebellagereinheit 3 befestigten HALL-Sensor.

Damit die Aktoren 50a, 50b erstmals unterhalb einer Rotations- / Drehachsenebene X_{R} an den Aktorangriffsstellen 36, 37 im Innern des Hebels 30 anstehen (und nicht bereits oberflächig an der Oberseite 40 des Hebels 30), weist der Hebel 30 keilförmig nach unten zulaufende Keilaussparungen 39 auf, die an der Oberseite 40 beginnen und sich bis zu den Aktorangriffsstellen 36, 37 im Innern des Hebels 30 erstrecken. Die jeweiligen tiefsten Punkte bzw. Stellen der Keilaussparungen 39 im Hebel 30 definieren dabei eine erste Aktorangriffsstelle 36 für einen ersten Aktor 50a (in Figur 1 der linke Aktor) und eine zweite Aktorangriffsstelle 37 für einen zweiten Aktor 50b (in Figur 1 der rechte Aktor). Die Keilaussparungen 39 sind so ausgebildet, dass darin die im bestimmungsgemäß zusammengesetzten Zustand des Dosiersystems 1 ebenfalls keilförmig zulaufenden Fronten bzw. Spitzen 54 der schräg zueinander gestellten Aktoren 50a, 50b umseitig Platz finden bzw. mit etwas Spiel aufgenommen sind.

Wie insbesondere in Figur 5 zu sehen ist, bestehen die Aktorangriffsstellen 36, 37 konstruktiv aus den zwei bereits erwähnten Zylinderstiften 36z, 37z, an denen die Aktoren 50a, 50b mit ihren Fronten 54 anstehen und sich auf den Zylinderstiften 36z und 37z abrollen können. Die anstehenden Vorderseiten der Fronten 54 der Aktoren 50a, 50b sind dabei jeweils vorne konkav an die Zylinderstifte 36z, 37z mit einem relativ gesehen etwas größeren Radius angepasst. Die Kernbohrungen sind dazu in Querrichtung 30Q durchgängig von einer Längsseite zur anderen Längsseite des Hebels 30 durch den Hebel 30 ausgebildet, werden nahezu vollständig durch die Zylinderstifte 36z, 37z ausgefüllt (siehe Figur 5) und schneiden einen Endbereich der Keilaussparungen 39, so dass die Kernbohrungen abschnittsweise nach oben zu den Keilaussparungen 39 geöffnet sind. Dabei ist der Radius der Kernbohrungen auf die Zylinderstifte 36z, 37z angepasst, so dass ein sicherer Halt gewährleistet ist und die Aktoren 50a, 50b mit ihren Fronten 54 auf den festsitzenden Zylinderstiften 36z, 37z, eine reibarme relative Rollbewegung gewährleisten.

Mittig in Längsrichtung 30L, schräg oberhalb zwischen den besagten Kernbohrungen befinden sich die oben bereits erwähnten Aussparungen 41 für die anderen bereits erwähnten Zylinderstifte 42, mittels derer ja der Hebel 30 kippbar um die Rotationsachse R im Innenraum zwischen den zwei Schenkeln der Hebelauflage 4 gelagert ist. Auch der Radius der Aussparungen 41 ist etwas größer als der der Zylinderstifte 42, so dass ebenso eine "fixe" Sollposition vorliegt und doch eine reibarme relative Rollbewegung gewährleistet ist. Die Aussparungen 41 beginnen in Querrichtung 30Q betrachtet außerhalb der Keilaussparungen 39 in einander gegenüberliegenden, voneinander beabstandeten Randbereichen des Hebels 30 (siehe Figur 3). In Tiefenrichtung 30T des Hebels 30 erstrecken sie sich von der Unterseite bis oberhalb einer sogenannten Angriffsachsenebene X_{A} des Hebels 30 (siehe Figur 4). Die Angriffsachsenebene X_{A} wird per Definition durch die Aktorangriffsstellen 36, 37 aufgespannt bzw. gebildet, welche Aktorangriffsstellen 36, 37 sich auf den Oberflächen der Zylinderstifte 36z, 37z befinden. In einer Mittelposition P₀ des Hebels 30 ist die Angriffsachsenebene X_{A} horizontal ausgerichtet. Die Zylinderstifte 42 sind dabei (wie in Figur 5 zu erkennen ist) in etwa zur Hälfte ihrer Länge mit der inneren Hälfte 42b in den Aussparungen 41 aufgenommen (in denen sie wie oben erwähnt oberseitig bzw. mit ihrer Oberseite anstehen) und liegen mit der anderen äußeren Hälfte 42a mit ihrer Unterseite auf den Schenkeln in den halbkreisförmig nach oben offenen Mulden der Hebelauflage 4 auf. Der Hebel 30 lässt sich demzufolge sehr einfach bei einer Montage, um in diesen Betriebszustand zu gelangen, von oben in die Hebelauflage 4 einsetzen, bevor die weiteren Komponenten aufgesetzt bzw. aufmontiert werden.

Im Betriebszustand ist der Hebel 30 insgesamt sehr platzsparend auf bzw. in der Hebelauflage 4 angeordnet, da er in seiner Tiefenrichtung 30T in etwa bis zur Hälfte seiner Höhe bzw. Tiefe mit gerade ausreichend viel Spiel in den Innenraum zwischen den Schenkeln der Hebelauflage 4 hineinragt bzw. darin aufgenommen ist. Mit dieser Art der Lagerung lässt er sich wie vorgesehen um die Kippachse R ohne direkten Kontakt zur Hebelauflage 4 zumindest um einige Grad, nämlich vorzugsweise zwischen +-0,1° bis +-5° (Grad), verkippen. Besonders bevorzugt ist dabei ein Kippwinkel von +-0,5°. Dabei verläuft seine in Querrichtung durch den Hebel 30 verlaufende Drehachse R in Längsrichtung 30L außermittig seines Schwerpunkts.

Um das Gewicht des Hebels 30, insbesondere seines länglichen Auslegers möglichst zu reduzieren, weist der Hebel 30 neben der (in Figur 4 linken) auslegernahen Keilaussparung 39 vier Bohrungen 38 bzw. Ausnehmungen 38 auf. Die Bohrungen 38 sind kreisrund, unterschiedlich groß und nehmen in Richtung zum Endabschnitt 33 im Durchmesser ab, da sie der insgesamt zum Endabschnitt 33 flacher werdenden Form des Hebels 30 angepasst sind. Sie sind jeweils leicht voneinander beabstandet und verlaufen in Querrichtung 30Q betrachtet jeweils durchgängig durch den Hebel 30. Die Bohrungen 38 sorgen funktional für eine maximale Gewichtsreduzierung des Hebels 30, ohne dabei die Stabilität des Hebels 30 zu beeinträchtigen. Mit der obigen Formulierung "flacher werdend" ist gemeint, dass der Hebel 30 beginnend mit der auslegernahen Keilaussparung 39 in Längsrichtung 30L zum Endabschnitt 33 hin eine schräg zur Oberseite 40 hin verlaufende Unterseite aufweist, also in Tiefenrichtung 30T weniger tief, respektive flacher wird. Dadurch liegt der mit dem Stößelkopf 14 in Kontakt stehende Endabschnitt 33 am Ende des länglichen Auslegers in der Mittelposition P₀ des Hebels 30 genau in derselben Höhe, wie das obere Ende der Aussparungen 41 im Hebel 30 für die oben erwähnten Zylinderstifte 42 im voluminösen Abschnitt des Hebels 30. Mit anderen Worten liegt der Endabschnitt 33 in der Mittelposition P₀ des Hebels 30 also exakt in der Rotations- bzw. Drehachsenebene X_{R}.

Auf die Hebelauflage 4 kann hierzu (nicht zwingend) oberseitig, zumindest die Zylinderstifte 42 nach oben hin einfassend, ein Hebellagerabschluss (zur besseren Übersichtlichkeit nicht dargestellt) als oberer Abschluss bzw. teilweise offener Deckel mit Löchern für die Aktoren 50a, 50b aufgesetzt werden. Um den Hebel 30 dabei nahezu vollständig von oben einzufassen bzw. einzuschließen, kann ein solcher Hebellagerabschluss in etwa dieselbe Größe und Form aufweisen, wie die Hebelauflage 4 darunter. Dabei kann er schräg von oben nach unten verlaufende Durchgangsöffnungen für die Aktoren 50a, 50b aufweisen, durch die die Aktoren 50a, 50b mit ihren zylinderförmigen Übertragern 53 (in Wirkungsrichtung 52a, 52b hinter den Fronten 54 der Aktoren 50a, 50b) hindurchverlaufen, um an den Aktorangriffsstellen 36, 37 am Hebel 30 angreifen zu können. Mit einer Hebelauflage 4 und einem Hebellagerabschluss darüber wird erreicht, dass der Hebel 30 darin weitestgehend gegenüber dem restlichen Dosiersystem 1 abgeschirmt beweglich gelagert ist.

Oberhalb des Hebels 30 sind die beiden schräg zueinander gestellten, symmetrisch zur Achse S_{T} ausgerichteten Aktoren 50a, 50b angeordnet, die wie erwähnt mit ihren konkav ausgebildeten Vorderseiten der Spitzen bzw. Fronten 54 an den Zylinderstiften 36z, 37z der Aktorangriffsstellen 36, 37 am Hebel 30 anstehen.

Bei den zwei baugleichen Aktoren 50a, 50b bzw. Piezoaktoren 50a, 50b handelt es sich jeweils um mehrere wie üblich zu einem Piezostack gestapelte Piezoelemente 51 bzw. "Piezoplättchen", mit denen unter Anlegen einer elektrischen Spannung mittels des sogenannten "inversen Piezoeffekts" eine mechanische Bewegung in Längsrichtung bzw. Wirkungsrichtung 52a, 52b der Aktoren 50a, 50b, d. h. eine Längenänderung normal bzw. senkrecht zur Fläche der Piezoelemente 51 entlang der Längsachse 52a, 52b des jeweiligen Aktors 50a, 50b, erzeugt wird.

Die gekapselten Aktoren 50a, 50b sind dabei jeweils in einer mit O-Ringen 57 abgedichteten Aussparung 56 der Rahmengehäuseeinheit 2 um die Piezoelemente 51 eingebettet und werden im Betrieb mithilfe einer in der Rahmengehäuseeinheit 2 integrierten Kühleinrichtung 60 des Dosiersystems 1 innerhalb der Aussparung 56 in der Rahmengehäuseeinheit 2 gekühlt.

Die Kühleinrichtung 60 bzw. das Kühlkanalsystem 60 umfasst einen Zuführkanal 61 zur Einführung eines Kühlmediums zur Kühlung der Piezoelemente 51 mittig zwischen den Aktoren 50a, 50b sowie zwei Abführkanäle 63a, 63b zur parallelen kontinuierlich anschließenden Wiederabführung des Kühlmediums seitlich, in Längsrichtung 30L (in Figur 1 links und rechts) neben den Piezoelementen 51 bzw. Aktoren 50a, 50b. Von einer mit dem Dosiersystem 1 am oberen Abschnitt bzw. Rahmen der Rahmengehäuseeinheit 2 gekoppelten Quelle strömt das Kühlmedium im Zuführkanal 61 parallel zu den Aktoren 50a, 50b in einer (in Figur 1 nach unten gerichteten) Kühlstromrichtung 60i zu den Übertragern 53 der Aktoren 50a, 50b. Unmittelbar oberhalb der Übertrager 53 - abgedichtet durch zwei O-Ringe 57 zur Abdichtung des Spaltes zwischen der Aussparung 56 und einer Außenhaut der hermetisch gekapselten Aktoren 50a, 50b - wird es in eine Gegenrichtung entgegen der Wirkungsrichtung 52a, 52b der Aktoren 50a, 50b zu den endseitigen Anschlüssen 55 der Aktoren 50a, 50b (in Figur 1 schräg nach oben) umgelenkt bzw. umgeleitet und strömt anschließend jeweils über seitliche Einlässe 62 des Zuführkanals 61 senkrecht (schräg nach unten) in die Aussparung 56 der Piezoelemente 51 der zueinander schräg gestellten Aktoren 50a, 50b hinein, so dass die Piezoelemente 51 der Aktoren 50a, 50b ringsum mit dem kühlen Kühlmedium umströmt werden. Das Kühlmedium propagiert dabei gleichmäßig von einer Innenseite mittig zwischen den Aktoren 50a, 50b (leicht schräg abwärts) nach außen entlang der mäanderförmigen Außenhaut der hermetisch gehausten gestapelten Piezoelemente 51 bzw. um die Piezoelemente 51 herum, nimmt die von den Aktoren 50a, 50b erzeugte Wärme auf und strömt anschließend über seitliche Auslässe 64 aus der Aussparung 56 in die beiden Abführkanäle 63a, 63b (rechts und links) auf den Außenseiten der Aktoren 50a, 50b hinein. Dort, in den beiden seitlichen Abführkanälen 63a, 63b wird das erwärmte Kühlmedium (nach oben hin) in einer (aufwärts) gerichteten Kühlstromrichtung 60o zu den beiden Ausgängen der Abführkanäle 63a, 63b des Kühlkanalsystems 60 am oberen Abschnitt bzw. Rahmen der Rahmengehäuseeinheit 2 angesaugt bzw. abgeführt. Mittels der einzelnen mittigen Einführung und der beidseitigen parallelen Abführung des Kühlmediums auf den beiden voneinander in Längsrichtung 30L entfernten Außenseiten der Aktoren 50a, 50b kann ein Staudruck des Kühlmediums im Kühlkanalsystem 60 minimiert werden und damit eine Kühlleistung bzw. Kühleffektivität des Kühlkanalsystems 60 maximiert werden.

Zusätzlich zu den endseitigen Anschlüssen 55 zur Steuerung der Strom- bzw. Spannungsversorgung der Aktoren 50a, 50b umfassen die Aktoren 50a, 50b jeweils einen Temperatursensor 65, welcher Temperaturdaten liefert, mittels derer unter anderem die Kühlleistung des Kühlkanalsystems 60 reguliert bzw. gesteuert werden kann.

Zusammenfassend lässt sich das Dosiersystem 1 strukturell sowie funktional im Wesentlichen in zwei gegeneinander über das Federelement 21 federnd gelagerte Einheiten 2, 60, 3, 4, 5, 30, 50a, 50b wie folgt aufteilen bzw. aufgliedern. Eine "statische" Einheit 2 umfasst unter anderem die Rahmengehäuseeinheit 2 und den Gehäuseboden 2' der Rahmengehäuseeinheit 2. Zusätzlich kann sie zumindest die integrierte Kühleinrichtung 60, eine Steuerungsplatine zur Steuerung des Dosiersystems 1, eine Isolierplatine, eine Anbindungsplatine, mögliche Anschlüsse, insbesondere für die Quelle und die Ausgänge des Kühlmediums und eine Spannungsversorgung für das Dosiersystem 1 umfassen.

Eine "dynamische" Einheit 3, 4, 5, 30, 50a, 50b bzw. Bewegungsmechanik 3, 4, 5, 30, 50a, 50b umfasst mindestens die Hebellagereinheit 3 mit der Hebelauflage 4 und der Fluidikpositionierung 5, den Hebel 30 und die beiden Aktoren 50a, 50b. Zusätzlich kann sie an der Fluidikpositionierung 5 mit der Ventileinheit 9 und der Fluidikeinheit 8 gekoppelt sein und gegebenenfalls einen Permanentmagneten am Hebel 30 und einen korrespondierenden HALL-Sensor an der Hebellagereinheit 3 zur Bestimmung der Position bzw. Stellung des Hebels 30 umfassen. An die Fluidikeinheit 8 kann dabei am Dosiermedien-Versorgungsanschluss 17 entweder eine Dosierstoffkartusche 17r oder lediglich eine Zuleitung bzw. ein Schlauch von einem Dosierstofftank angeschlossen sein.

Die beiden zuvor erwähnten Einheiten können dabei vorteilhafterweise so dimensioniert und gewichtet sein, dass sie im Wesentlichen dieselbe Masse aufweisen, d. h. eine Gesamtmasse des Dosiersystems 1 im Wesentlichen zu gleichen Teilen in die "statische" Einheit sowie in die "dynamische" Einheit aufgeteilt ist. Damit wird - wie mit der Erfindung bezweckt - insgesamt ein noch stabileres, qualitativ hochwertigeres Dosierergebnis mit einer besonders hohen Dosiergeschwindigkeit bzw. Dosierfrequenz erzielt, da sich die Schwingungen der beiden Einheiten gegenseitig abschwächen bzw. ausgleichen. Sofern die Fluidikeinheit 8, wie in Figur 1 dargestellt, mit einer Dosierstoffkartusche 17r ausgebildet ist, deren Inhalt sich mit der Dosierung verändert, kann dies bei der Verteilung der Gesamtmasse berücksichtigt werden, beispielsweise derart, dass sich die Hauptmassen der Gesamtmasse zumindest im Mittel ausgleichen.

Es wird abschließend noch einmal darauf hingewiesen, dass es sich bei den vorhergehend detailliert beschriebenen Vorrichtungen lediglich um Ausführungsbeispiele handelt, welche vom Fachmann in verschiedenster Weise modifiziert werden können, ohne den Bereich der Erfindung zu verlassen. So könnte beispielsweise das Dosiersystem auch konstruktiv derart umgestaltet sein, dass als Federelement eine entsprechend ausgebildete und angeordnete Zugfeder verwendet werden könnte. Weiterhin schließt die Verwendung der unbestimmten Artikel "ein" bzw. "eine" nicht aus, dass die betreffenden Merkmale auch mehrfach vorhanden sein können.

### Bezugszeichenliste

- 1: Dosiersystem
- 2: Rahmengehäuseeinheit
- 2': Gehäuseboden
- 3: Hebellagereinheit
- 4: Hebelauflage
- 5: Fluidikpositionierung
- 5s: Schnittstelle zwischen Fluidikpositionierung und Fluidikeinheit
- 6: Drehgelenk
- 7: Verstellelement / Stellschraube
- 8: Fluidikeinheit
- 9: Ventil / Ventileinheit
- 10: Ventilkörper
- 11: Ventilkammer / Düsenkammer
- 12: Düse
- 12': Düseneinsatz
- 13: Ausstoßelement / Stößel
- 14: Stößelkopf
- 15: Stößelfeder
- 16: Stößelspitze
- 17: Dosiermedien-Versorgungsanschluss
- 17r: Reservoir / Dosierstoffkartusche
- 18: Heizungseinheit
- 19: Anschluss / Heizungskabel
- 20: Heizungselement
- 21: Federelement / Tellerfederpaket
- 30: Hebel
- 30B: Stößelbewegung
- 30L: Längsrichtung des Hebels
- 30Q: Querrichtung des Hebels
- 30T: Tiefenrichtung des Hebels
- 31: Hebelarm, zweiseitig
- 32: kürzere Hebelarmseite
- 33: Endabschnitt
- 34: Bohrung (für Permanentmagneten)
- 35: längere Hebelarmseite
- 36: erste Aktorangriffsstelle
- 36z: erster Zylinderstift der ersten Aktorangriffsstelle
- 37: zweite Aktorangriffsstelle
- 37z: zweiter Zylinderstift der zweiten Aktorangriffsstelle
- 38: Bohrungen / Durchgangsbohrungen / Ausnehmungen
- 39: Keilaussparungen
- 40: (Hebel-)Oberseite des Hebels
- 41: Aussparung für Zylinderstifte in der Hebelauflage
- 42: Zylinderstifte
- 42a: äußere Hälfte des Zylinderstifts
- 42b: innere Hälfte des Zylinderstifts
- 50a, 50b: Aktoren / Piezoaktoren (hier gekapselt)
- 51: Piezoelemente
- 52a: erste Wirkungsrichtung / Längsachse des ersten Aktors
- 52b: zweite Wirkungsrichtung / Längsachse des zweiten Aktors
- 53: Übertrager der Aktoren
- 54: Fronten / Spitzen der Aktoren
- 55: Anschlüsse der Aktoren
- 56: Aussparung für die Piezoaktoren
- 57: O-Ring
- 60: Kühleinrichtung / Kühlkanalsystem
- 60i, 60o: Kühlstromrichtungen
- 61: Zuführkanal
- 62: Einlässe des Zuführkanals in die Aktoren
- 63a, 63b: Abführkanäle, zwei
- 64: Auslässe des Abführkanals aus den Aktoren
- 65: Temperatursensor

- A-A: Schnittlinie durch das Dosiersystem
- B-B: Schnittlinie durch den Hebel
- DR: Dosierrichtung
- K: Kreis der Aktorangriffsstellen
- P₀: Mittelposition
- R: Rotations- / Kippachse
- S_{T}: erste Symmetrieachse der Symmetrieebene der Aktoren
- S_{Q}: zweite Symmetrieachse der Symmetrieebene der Aktoren
- Vₐ: erste Verbindungslinie
- V_{b}: zweite Verbindungslinie
- X_{A}: Angriffsachsenebene
- X_{R}: Rotations- / Drehachsenebene

## Patentansprüche

1. Dosiersystem (1) zur Dosierung eines Dosiermediums umfassend
- eine Rahmengehäuseeinheit (2),
- eine an der Rahmengehäuseeinheit (2) gelagerte Hebellagereinheit (3) mit einer Hebelauflage (4),
- einen mittels der Hebelauflage (4) um eine Kippachse (R) drehbar gelagerten, vorzugsweise asymmetrischen, Hebel (30) mit einem sich im Wesentlichen in einer Längsrichtung (30L) des Hebels (30) erstreckenden, zweiseitigen Hebelarm (31), wobei eine Hebelarmseite (35), vorzugsweise die längere Hebelarmseite (35), kippachsennah eine erste Aktorangriffsstelle (36) aufweist und kippachsenfern an einem Endabschnitt (33) mit einem Ausstoßelement (13), vorzugsweise einem Stößel (13), in Kontakt steht und
wobei die andere Hebelarmseite (32), vorzugsweise die kürzere Hebelarmseite (32), kippachsennah eine zweite Aktorangriffsstelle (37) aufweist,
- zwei Aktoren (50a, 50b), die im Betrieb gegenläufig ein Kippmoment an der ersten und zweiten Aktorangriffsstelle (36, 37) auf den Hebel (30) ausüben,
wobei die Hebellagereinheit (3), der Hebel (30) und die beiden Aktoren (50a, 50b) gemeinsam eine Bewegungsmechanik (3, 4, 5, 30, 50a, 50b) bilden, die mittels zumindest eines Federelements (21), vorzugsweise eines Tellerfederpakets (21), an der Rahmengehäuseeinheit (2) verspannt ist,
wobei vorzugsweise das Federelement (21) so angeordnet ist, dass es die Hebellagereinheit (3) über den Hebel (30) sowie über die beiden Aktoren (50a, 50b) gegen die Rahmengehäuseeinheit (2) verspannt,
**dadurch gekennzeichnet, dass** die Aktoren (50a, 50b) V-förmig schräg zueinander gestellt sind.

2. Dosiersystem nach Anspruch 1, wobei sich die beiden Aktoren (50a, 50b) auf einer gemeinsamen Längsseite des Hebels (30) befinden.

3. Dosiersystem nach Anspruch 1 oder 2, wobei die Aktoren (50a, 50b) maximal in einem 150° Winkel, bevorzugt maximal in einem 120° Winkel, noch weiter bevorzugt maximal in einem 90° Winkel, besonders bevorzugt maximal in einem 60° Winkel und ganz besonders bevorzugt maximal in einem 30° Winkel, V-förmig zueinander schräg gestellt sind.

4. Dosiersystem nach einem der vorstehenden Ansprüche, wobei die Aktorangriffsstellen (36, 37) am Hebel (30) für die Aktoren (50a, 50b) nicht in einer Ebene der Kippachse (R) liegen.

5. Dosiersystem nach einem der vorstehenden Ansprüche, wobei der Hebel (30) derart ausgebildet und angeordnet ist, dass die Aktorangriffsstellen (36, 37) weiter entfernt von einer zu den Aktoren (50a, 50b) weisenden Längsseite des Hebels (30) im Hebel (30) positioniert sind als die Kippachse (R), an welcher Kippachse (R) der Hebel (30) drehbar gelagert aufliegt.

6. Dosiersystem nach einem der vorstehenden Ansprüche, wobei die Aktoren (50a, 50b) derart an den Aktorangriffsstellen (36, 37) angreifen, dass in einer Mittelposition (P₀) des Hebels (30) jeweils eine Längsachse (52a, 52b) der Aktoren (50a, 50b) im Wesentlichen senkrecht auf einer jeweiligen Verbindungslinie (Vₐ, V_{b}) zwischen der betreffenden Aktorangriffsstelle (36, 37) und der Kippachse (R) steht.

7. Dosiersystem nach einem der vorstehenden Ansprüche, wobei die Aktoren (50a, 50b) derart tangential an einem Kreis (K) um die Kippachse (R) an den Aktorangriffsstellen (36, 37) angeordnet sind, dass sie im Betrieb zur Dosierung eines Dosiermediums bei einer Ausstoß- und Rückzugsbewegung im Wesentlichen eine geradlinige Bewegung durchführen.

8. Dosiersystem nach einem der vorstehenden Ansprüche, wobei der Hebel (30) eine inhomogene Massenverteilung aufweist,
wobei vorzugsweise eine Masse des Hebels (30) derart entlang des Hebels (30) relativ zur Kippachse (R) verteilt ist, dass der Hebel (30) insgesamt bezogen auf die Kippachse (R) ein möglichst geringes (Massen-)Trägheitsmoment aufweist.

9. Dosiersystem nach einem der vorstehenden Ansprüche, wobei der Hebel (30) eine Mehrzahl von Ausnehmungen (38), vorzugsweise querverlaufenden Durchgangsbohrungen (38), zur Gewichtsreduzierung aufweist.

10. Dosiersystem nach einem der vorstehenden Ansprüche, wobei eine Gesamtmasse des Dosiersystems (1) im Wesentlichen gleichmäßig auf die Rahmengehäuseeinheit (2) und die Hebellagereinheit (3) aufgeteilt ist.

11. Dosiersystem nach einem der vorstehenden Ansprüche, wobei die Hebellagereinheit (3) mehrteilig ausgebildet ist, insbesondere zusätzlich zur Hebelauflage (4) eine Fluidikpositionierung (5) für eine Fluidikeinheit (8) des Dosiersystems (1) umfasst,
wobei vorzugsweise die Hebelauflage (4) über ein Drehgelenk (6) mit der Fluidikpositionierung (5) drehbar verbunden ist,
und/oder wobei die Hebelauflage (4) und die Fluidikpositionierung (5) mechanisch gegeneinander verstellbar gelagert sind.

12. Dosiersystem nach einem der vorstehenden Ansprüche, wobei die Hebellagereinheit (3) eine Ringkonstruktion (4, 5) umfasst, welche unter Belassen mindestens eines Spalts einen Abschnitt (2') der Rahmengehäuseeinheit (2) ringartig umschließt,
und
wobei vorzugsweise die Hebellagereinheit (3) mittels des Federelements (21), welches vorzugsweise in einem Spalt zwischen der Hebellagereinheit (3) und dem Abschnitt (2') der Rahmengehäuseeinheit (2) angeordnet ist, verschiebbar an der Rahmengehäuseeinheit (2) gelagert ist,
und/oder
wobei vorzugsweise die Ringkonstruktion (4, 5) ein (das) Drehgelenk (6) umfasst und die Hebelauflage (4) der Hebellagereinheit (3) über den Hebel (30) und den Stößel (13) zur Einstellung eines Stößel-Düsen-Abstandes an einer drehgelenkfernen Seite der Fluidikpositionierung (5) mittels eines Verstellelements (7), insbesondere einer Stellschraube (7), mit der Fluidikpositionierung (5) mechanisch einstellbar gekoppelt ist.

13. Dosiersystem nach einem der vorstehenden Ansprüche, wobei die Aktoren (50a, 50b) jeweils gekapselt ausgebildet sind,
und/oder wobei beide Aktoren (50a, 50b) jeweils zumindest einen Temperatursensor (65) umfassen.

14. Dosiersystem nach einem der vorstehenden Ansprüche, wobei die Aktoren (50a, 50b) jeweils eine Gas-, vorzugsweise Luft-, oder Flüssigkeit-durchströmte Kühleinrichtung (60) umgibt,
wobei die Kühleinrichtung (60) vorzugsweise einen Zuführkanal (61) zwischen den Aktoren (50a, 50b) mit Einlässen (62) in die Aktoren (50a, 50b) und zwei außermittige Abführkanäle (63a, 63b) mit Auslässen (64) in die Abführkanäle (63a, 63b) aufweist.

## Claims

1. A metering system (1) for metering a metered medium comprising
- a frame housing unit (2),
- a lever mounting unit (3) which is supported on the frame housing unit (2) comprising a lever mount (4),
- a, preferably asymmetrical, lever (30) which is supported rotatably by means of the lever mount (4) about a tilt axis (R) comprising a two-sided lever arm (31) extending substantially in a longitudinal direction (30L) of the lever (30),
wherein one lever arm side (35), preferably the longer lever arm side (35), has a first actuator engagement point (36) close to the tilt axis and is in contact remotely from the tilt axis at an end portion (33) with an ejection element (13), preferably a ram (13), and wherein the other lever arm side (32), preferably the shorter lever arm side (32), has a second actuator engagement point (37) close to the tilt axis,
- two actuators (50a, 50b), which, during operation, exert a tilting moment in opposite directions on the lever (30) at the first and second actuator engagement point (36, 37),
wherein together, the lever mounting unit (3), the lever (30), and the two actuators (50a, 50b) form a movement mechanism (3, 4, 5, 30, 50a, 50b), which is braced on the frame housing unit (2) by means of at least one spring element (21), preferably a disc spring set (21),
wherein the spring element (21) is preferably arranged so that it braces the lever mounting unit (3) against the frame housing unit (2) via the lever (30) as well as via the two actuators (50a, 50b),**characterized in that** the actuators (50a, 50b) are placed obliquely to one another in a V-shaped manner.

2. The metering system according to claim 1, wherein the two actuators (50a, 50b) are located on a common longitudinal side of the lever (30).

3. The metering system according to claim 1 or 2, wherein the actuators (50a, 50b) are placed obliquely to one another in a V-shaped manner, maximally at a 150° angle, preferably maximally at a 120° angle, even more preferably maximally at a 90° angle, particularly preferably maximally at a 60° angle, and most preferably maximally at a 30° angle.

4. The metering system according to one of the preceding claims, wherein the actuator engagement points (36, 37) on the lever (30) for the actuators (50a, 50b) are not located in a plane of the tilt axis (R).

5. The metering system according to one of the preceding claims, wherein the lever (30) is formed and arranged in such a way that the actuator engagement points (36, 37) are positioned in the lever (30) further away from a longitudinal side of the lever (30) facing the actuators (50a, 50b), than the tilt axis (R), on which tilt axis (R) the lever (30) is supported rotatably.

6. The metering system according to one of the preceding claims, wherein the actuators (50a, 50b) engage with the actuator engagement points (36, 37) in such a way that in a central position (P₀) of the lever (30), a longitudinal axis (52a, 52b) of the actuators (50a, 50b) is in each case substantially perpendicular to a respective connecting line (Vₐ, V_{b}) between the respective actuator engagement point (36, 37) and the tilt axis (R).

7. The metering system according to one of the preceding claims, wherein the actuators (50a, 50b) are arranged tangentially on a circle (K) about the tilt axis (R) on the actuator engagement points (36, 37) in such a way that they substantially perform a straight movement during operation for metering a metered medium in response to an ejection and withdrawal movement.

8. The metering system according to one of the preceding claims, wherein the lever (30) has an inhomogeneous mass distribution,
wherein a mass of the lever (30) is preferably distributed relative to the tilt axis (R) along the lever (30) in such a way that the lever (30) as a whole, based on the tilt axis (R), has a smallest possible (mass) moment of inertia.

9. The metering system according to one of the preceding claims, wherein the lever (30) has a plurality of recesses (38), preferably transversely running through bores (38), for weight reduction purposes.

10. The metering system according to one of the preceding claims, wherein a total mass of the metering system (1) is divided substantially evenly to the frame housing unit (2) and the lever mounting unit (3).

11. The metering system according to one of the preceding claims, wherein the lever mounting unit (3) is of multi-part construction, in particular comprises a fluidic positioning (5) for a fluidic unit (8) of the metering system (1) in addition to the lever mount (4), wherein the lever mount (4) is preferably connected in a rotatable manner to the fluidic positioning (5) via a rotary joint (6),
and/or wherein the lever mount (4) and the fluidic positioning (5) are supported in a mechanically adjustable manner against one another.

12. The metering system according to one of the preceding claims, wherein the lever mounting unit (3) comprises a ring construction (4, 5), which encloses a portion (2') of the frame housing unit (2) in a ring-like manner by leaving at least one gap,
and
wherein the lever mounting unit (3) is preferably supported on the frame housing unit (2) in a displaceable manner by means of the spring element (21), which is preferably arranged in a gap between the lever mounting unit (3) and the portion (2') of the frame housing unit (2),
and/or
wherein the ring construction (4, 5) preferably comprises a (the) rotary joint (6), and the lever mount (4) of the lever mounting unit (3) is coupled to the fluidic positioning (5) in a mechanically adjustable manner via the lever (30) and the ram (13) for adjusting a ramnozzle distance on a side of the fluidic positioning (5) remotely from the rotary joint by means of an adjusting element (7), in particular an adjusting screw (7).

13. The metering system according to one of the preceding claims, wherein the actuators (50a, 50b) are in each case formed in an encapsulated manner,
and/or wherein both actuators (50a, 50b) in each case comprise at least one temperature sensor (65).

14. The metering system according to one of the preceding claims, wherein a cooling device (60), through which gas, preferably air, or liquid flows, in each case surrounds the actuators (50a, 50b),
wherein the cooling device (60) preferably has a feed channel (61) between the actuators (50a, 50b) comprising inlets (62) into the actuators (50a, 50b) and two eccentric discharge channels (63a, 63b) comprising outlets (64) into the discharge channels (63a, 63b).

## Revendications

1. Système de dosage (1) pour le dosage d'un milieu de dosage comprenant
- une unité de boîtier de cadre (2),
- une unité de palier à levier (3) montée sur l'unité de boîtier de cadre (2) avec un appuide levier (4),
- un levier (30) au moyen de l'appui de levier(4), de préférence asymétrique, monté pivotant autour d'un axe de basculement (R), avec un bras de levier (31) s'étendant essentiellement dans une direction longitudinale (30L) du levier (30), à deux côtés.
un côté de bras de levier (35), de préférence le côté de bras de levier le plus long (35), près de l'axe de basculement présentant un premier point d'attaque d'actionneur et loin de l'axe de basculement une section d'extrémité (36) étant en contacte (33), avec un élément d'éjection (13), de préférence un poussoir (13),
l'autre côté du bras de levier (32), de préférence le côté le plus court du bras de levier (32), près de l'axe de basculement présentant un deuxième point d'attaque d'actionneur (37),
- deux actionneurs (50a, 50b) qui, en fonctionnement, en sens inverse un couple de basculement au niveau du premier et du deuxième point d'actionneur (36, 37) exercent sur le levier (30)
l'unité de palier de levier (3), le levier (30) et les deux actionneurs (50a, 50b) formant ensemble un mécanisme de mouvement (3, 4, 5, 30, 50a, 50b) qui au moyen d'au moins un élément de ressort (21) est serré sur l'unité de boîtier de cadre (2), de préférence , un paquet de rondelles Belleville (21)
de préférence, l'élément de ressort (21) étant disposé de manière à l'unité de palier à levier (3) par l'intermédiaire du levier (30) ainsi que des deux actionneurs (50a, 50b) sont serré contre l'unité de boîtier de cadre (2), **caractérisé en ce que** les actionneurs (50a, 50b) sont inclinés l'un par rapport à l'autre en forme de V.

2. Système de dosage selon la revendication 1, dans lequel les deux actionneurs (50a, 50b) se trouvent sur un côté longitudinal commun du levier (30).

3. Système de dosage selon la revendication 1 ou 2, dans lequel les actionneurs (50a, 50b) sont inclinés en forme de V l'un par rapport à l'autre au maximum selon un angle de 150°, de préférence au maximum selon un angle de 120°, de manière plus préférée au maximum selon un angle de 90°, de manière particulièrement préférée au maximum selon un angle de 60° et de manière tout à fait préférée au maximum selon un angle de 30°.

4. Système de dosage selon l'une des revendications précédentes, dans lequel les points d'attaque des actionneurs (36, 37) sur le levier (30) pour les actionneurs (50a, 50b) ne se trouvent pas dans un plan de l'axe de basculement (R)

5. Système de dosage selon l'une des revendications précédentes, dans lequel le levier (30) est conçu et disposé de telle sorte que les points d'attaque des actionneurs (36, 37) sont positionnés dans le levier (30) plus loin d'un vers les actionneurs (50a, 50b ) côté orienté longitudinal du levier (30) que l'axe de basculement (R), sur lequel axe de basculement (R) le levier (30) est monté pivotant.

6. Système de dosage selon l'une des revendications précédentes, dans lequel les actionneurs (50a, 50b) agissent de telle sorte par les points d'attaque d'actionneur (36, 37) que dans une position centrale (P₀) du levier (30), chacun un axe longitudinal (52a, 52b) d' actionneurs (50a, 50b) est sensiblement perpendiculaire à une ligne de liaison respective (Vₐ, V_{b}) entre le concerné point d'attaque d'actionneur (36, 37) et l'axe de basculement (R)

7. Système de dosage selon l'une quelconque des revendications précédentes, dans lequel les actionneurs (50a, 50b) sont disposés tangentiellement sur un cercle (K) autour de l'axe de basculement (R) au niveau des points d'actionnement des actionneurs (36, 37) de telle sorte qu'en fonctionnementils pour le dosage d'un milieu de dosage, effectuent un mouvement sensiblement rectiligne lors d'un mouvement d'éjection et de retrait.

8. Système de dosage selon l'une quelconque des revendications précédentes, dans lequel le levier (30) présente une répartition de masse non homogène,
de préférence une masse du levier (30) étant répartie le long du levier de telle sorte (30) par rapport à l'axe de basculement (R) que le levier (30) présente un moment d'inertie (de masse) aussi faible que possible, globalement par rapport à l'axe de basculement (R)

9. Système de dosage selon l'une des revendications précédentes, dans lequel le levier (30) présente une pluralité d'évidements (38), de préférence des trous de passage transversaux (38) pour réduire le poids.

10. Système de dosage selon l'une quelconque des revendications précédentes, dans lequel une masse totale du système de dosage (1) est répartie de manière sensiblement égale entre l'unité de boîtier de cadre (2) et l'unité de palier à levier (3)

11. Système de dosage selon l'une des revendications précédentes, dans lequel l'unité de palier de levier (3) est réalisée en plusieurs parties, en particulier, en plus de l'appui de levier comprend,(4), un positionnement fluidique (5) pour une unité fluidique (8) du système de dosage (1)
de préférence, l'appui de levier (4) étant relié de manière pivotant,au positionnement fluidique (5) par l'intermédiaire d'une articulation pivotante (6)
et/ou dans lequel l'appui de levier (4) et le positionnement fluidique (5) sont montés de manière réglables mécaniquement l'un par rapport à l'autre.

12. Système de dosage selon l'une des revendications précédentes, dans lequel l'unité de palier à levier (3) comprend une construction annulaire (4, 5) qui entoure à la manière d'un anneau une section (2') de l'unité de boîtier de cadre en laissant au moins un interstice (2), et
de préférence l'unité de palier de levier (3) au moyen de l'élément de ressort (21), qui est disposé de préférence dans un interstice entre l'unité de palier de levier (3) et la section (2') de l'unité de boîtier de cadre (2) étant logée déplaçable sur l'unité de boîtier de cadre (2) et/ou
de préférence la construction annulaire (4, 5) comprenant une (I') articulation pivotante (6) et l'appui de levier (4) de l'unité de palier de levier (3) étant couplé de manière mécaniquement réglable (5) avec le positionnement fluidique par l'intermédiaire du levier (30) et du poussoir (13) pour le réglage d'une distance poussoir-buse sur un côté du positionnement fluidique (5) éloigné de l'articulation pivotante au moyen d'un élément de réglage (7), en particulier une vis de réglage (7),

13. Système de dosage selon l'une quelconque des revendications précédentes, dans lequel les actionneurs (50a, 50b) sont chacun réalisés sous forme encapsulée,
et/ou dans lequel les deux actionneurs (50a, 50b) comprennent chacun au moins un capteur de température (65)

14. Système de dosage selon l'une quelconque des revendications précédentes, dans lequel les actionneurs (50a, 50b) entourent chacun un dispositif de refroidissement (60) circulé par un gaz, de préférence de l'air, ou liquide
dans lequel le dispositif de refroidissement (60) comprend de préférence un canal d'alimentation (61) entre les actionneurs (50a, 50b) avec des entrées (62) dans les actionneurs (50a, 50b) et deux canaux d'évacuation excentrés (63a, 63b) avec des sorties (64) dans les canaux d'évacuation (63a, 63b).
